# EUROPEAN PATENT APPLICATION

(11) **EP 4 340 284 A1**
(43) Date of publication of application: **20.03.2024**
(21) Application number: 22814728.6
(22) Date of filing: 11.02.2022
(51) Int. Cl.: H04L 5/00, H04W 74/08

(54) **PHYSICAL LAYER PROTOCOL DATA UNIT, AND TRANSMISSION METHOD AND APPARATUS FOR TRIGGER FRAME**

(30) Priority: 03.06.2021 CN 202110620383
(71) Applicant: Huawei Technologies Co., Ltd., Shenzhen, Guangdong 518129 (CN)
(72) Inventor: YU, Jian, Shenzhen, Guangdong 518129 (CN); HU, Mengshi, Shenzhen, Guangdong 518129 (CN); GAN, Ming, Shenzhen, Guangdong 518129 (CN)
(74) Representative: Epping - Hermann - Fischer
(86) International application number: PCT/CN2022/076082
(87) International publication number: WO 2022/252679

(57) **Abstract**

This application relates to the field of wireless fidelity (wireless fidelity, Wi-Fi) technologies, and provides a method for transmitting a physical layer protocol data unit, a method for transmitting a trigger frame, and an apparatus, to resolve a problem that it is difficult to ensure data transmission reliability of an extremely high throughput physical layer protocol data unit PPDU for multi-user transmission in a low power indoor LPI operation mode in the conventional technology. The method includes: An access point generates an extremely high throughput multiple user physical layer protocol data unit EHT MU PPDU, where the EHT MU PPDU includes a resource unit allocation subfield indicating resource unit allocation of a plurality of stations, and a resource unit corresponding to at least one of the plurality of stations is used for duplicate transmission; and sends the EHT MU PPDU.

## Description

This application claims priority to Chinese Patent Application No. 202110620383.2, filed with the China National Intellectual Property Administration on June 3, 2021 and entitled "METHOD FOR TRANSMITTING PHYSICAL LAYER PROTOCOL DATA UNIT, METHOD FOR TRANSMITTING TRIGGER FRAME, AND APPARATUS", which is incorporated herein by reference in its entirety.

### TECHNICAL FIELD

This application relates to the field of wireless fidelity (wireless fidelity, Wi-Fi) technologies, and in particular, to a method for transmitting a physical layer protocol data unit, a method for transmitting a trigger frame, and an apparatus.

### BACKGROUND

In a wireless local area network (wireless local area network, WLAN) technology, the 802.11be standard of the Institute of Electrical and Electronics Engineers (institute of electrical and electronics engineers, IEEE) defines an extremely high throughput multiple user physical layer protocol data unit (Extreme High Throughput Multiple User Physical Layer Protocol Data Unit, EHT MU PPDU) and an extremely high throughput trigger based physical layer protocol data unit (Extreme High Throughput Trigger Based Physical Layer Protocol Data Unit, EHT TB PPDU), to achieve a technical goal of an extremely high throughput.

In addition, for a 6 GHz spectrum, a low power indoor (Low Power Indoor, LPI) operation mode is defined, to be specific, a maximum transmit power and a maximum transmit frequency spectral density are strictly limited. A transmit power of an access point (Access Point, AP) or station (Station, STA) device is not allowed to exceed a maximum power value, and a transmit power spectral density is not allowed to exceed a maximum power spectral density. However, data transmission is greatly affected by a value of a transmit power, signal attenuation, and the like.

Therefore, it is difficult to ensure data transmission reliability in the LPI operation mode.

Currently, in order to improve the data transmission reliability, in the 802.11be standard, based on the LPI operation mode, a duplication operation and a dual carrier modulation operation may be performed on a data subcarrier in a data field in an EHT MU PPDU in a single-user transmission scenario, to transmit same information on different data subcarriers. A receive end may perform combined reception based on same information transmitted on a plurality of subcarriers, to improve the data transmission reliability.

However, in the foregoing technical solution, only a duplication mode for single-user transmission is implemented. For an EHT MU PPDU and an EHT TB PPDU for multi-user transmission in the LPI operation mode, there is still no good solution to how to improve the data transmission reliability.

### SUMMARY

This application provides a method for transmitting a physical layer protocol data unit, a method for transmitting a trigger frame, and an apparatus, to resolve a problem that it is difficult to guarantee data transmission reliability of an extremely high throughput physical layer protocol data unit PPDU for multi-user transmission in a conventional technology.

To achieve the foregoing objective, the following technical solutions are used in this application: According to a first aspect, a method for transmitting a physical layer protocol data unit is provided, and is applied to an access point and a station. In this embodiment of this application, the access point is merely used as an example. The method includes: generating an extremely high throughput multiple user physical layer protocol data unit EHT MU PPDU, where the EHT MU PPDU includes a resource unit allocation subfield, indicating resource unit allocation of a plurality of stations, and a resource unit corresponding to at least one of the plurality of stations is used for duplicate transmission; and sending the EHT MU PPDU.

In the foregoing technical solution, an RU duplicate transmission mechanism of one or more of a plurality of users may be added for the AP in an LPI operation mode. This improves data reliability of a receive end, and resolves a problem of low data reliability caused by a transmit power limit in a low-power scenario.

In an implementation, a common field in the EHT MU PPDU includes at least one resource unit allocation subfield, and the resource unit allocation subfield indicates a plurality of resource units obtained by dividing frequency domain resources corresponding to the PPDU based on a sequence. The resource unit allocation subfield of the EHT MU PPDU indicates the plurality of resource units in ascending order of frequency domain resources corresponding to the PPDU.

In an implementation, a user specific field included in the EHT MU PPDU includes a plurality of user fields. One user field includes one station identifier and corresponds to one resource unit. Station identifiers in at least two user fields are the same, to indicate that at least two resource units corresponding to the at least two user fields are used for duplicate transmission.

In the foregoing possible implementation, same station identifiers of the plurality of user fields in the EHT MU PPDU indicate that a plurality of corresponding RUs are used for duplicate transmission. This is easy to implement for both the receive end and a transmit end. Moreover, in the EHT MU PPDU, the resource unit allocation subfield accurately reflects a location of a pilot subcarrier, so that a third-party station may further estimate a center frequency deviation or a phase deviation by using a pilot subcarrier in an RU corresponding to another station, to improve data receiving performance.

In an implementation, the at least two resource units are consecutive or inconsecutive.

In the foregoing possible implementation, a plurality of RUs for duplicate transmission are allowed to be consecutive or inconsecutive in the EHT MU PPDU. If a station is relatively close to the AP, there is no need to enhance receiving performance of the station through RU duplicate transmission. In this case, normal transmission rather than duplicate transmission may be used for an RU of the station. In the EHT MU PPDU in this application, both an RU that uses duplicate transmission and an RU that does not use duplicate transmission may be allocated, and a configuration manner is flexible.

In an implementation, a value of a modulation and coding scheme MCS field of at least one user field of the at least two user fields that are included in the EHT MU PPDU and that correspond to the at least two resource units is 15, to indicate that dual carrier modulation is used for the at least two resource units.

In the foregoing possible implementation, a value of an MCS field in the EHT MU PPDU may indicate that dual carrier modulation is used for at least two resource units. An indication manner is flexible, and data transmission performance is improved.

In an implementation, a user field of the EHT MU PPDU includes first information. The first information indicates that a resource unit corresponding to the user field is used for duplicate transmission.

In the foregoing possible implementation, the first information may be added to the EHT MU PPDU, to indicate that the resource unit corresponding to the user field is used for duplicate transmission. This improves flexibility of an indication manner of duplicate transmission.

In an implementation, a quantity of times of duplicate transmission of the resource unit is pre-specified, or is pre-determined through negotiation with a station before the EHT MU PPDU is sent.

In the foregoing possible implementation, the quantity of duplicate transmissions of the resource unit that is indicated in the EHT MU PPDU and that is used for duplicate transmission may be flexibly configured, to improve reliability and flexibility of data transmission.

In an implementation, the first information is carried in a bit B 15 in the user field of the EHT MU PPDU, or a value of an MCS field in the user field of the EHT MU PPDU is 14, or the value of the MCS field is any one of 16 to 31, to indicate that the resource unit is used for duplicate transmission.

In the foregoing possible implementation, a value of an MCS field in the EHT MU PPDU may indicate that a corresponding resource unit is used for duplicate transmission. The indication manner is flexible and easy to implement.

In an implementation, different MCS values indicate different quantities of duplications of the resource unit used for duplicate transmission.

In an implementation, the user field in the EHT MU PPDU further includes second information. The second information indicates the quantity of duplicate transmissions of the resource unit corresponding to the user field.

In the foregoing possible implementation, the second information may be added to the EHT MU PPDU, to indicate the quantity of duplicate transmissions of the resource unit corresponding to the user field. This improves flexibility of an indication manner of the quantity of duplicate transmissions.

In an implementation, the first information or the second information or both are carried in one or more of the following bits in the EHT MU PPDU: bits B20 to B25 of a 1^{st} symbol in a universal signal field U-SIG, or a bit B2 or B8 of a 2^{nd} symbol in the U-SIG, or bits B13 to B16 of a 1^{st} symbol in an extremely high throughput signal field EHT-SIG.

In the foregoing possible implementation, a reserved field in the EHT MU PPDU may indicate that a corresponding resource unit is used for duplicate transmission. The indication manner is flexible and easy to implement.

In an implementation, the resource unit allocation subfield indicates that the resource unit is used for duplicate transmission.

According to a second aspect, a method for transmitting a physical layer protocol data unit is provided, and is applied to a target station. The method includes: receiving an EHT MU PPDU, where the EHT MU PPDU includes a resource unit allocation subfield, indicating resource unit allocation of a plurality of stations, and a resource unit corresponding to at least one of the plurality of stations is used for duplicate transmission; and determining, based on the EHT MU PPDU, that a plurality of resource units corresponding to the target station are used for duplicate transmission, and performing combined decoding on information carried in the plurality of resource units.

In an implementation, a user specific field included in the EHT MU PPDU includes a plurality of user fields. One user field includes one station identifier and corresponds to one resource unit. Station identifiers in at least two user fields are the same, to indicate that at least two resource units corresponding to the at least two user fields are used for duplicate transmission.

In an implementation, the at least two resource units are consecutive or inconsecutive.

In an implementation, a value of a modulation and coding scheme MCS field of at least one user field of the at least two user fields that are included in the EHT MU PPDU and that correspond to the at least two resource units is 15, to indicate that dual carrier modulation is used for the at least two resource units.

In an implementation, a user field that is in the EHT MU PPDU and that corresponds to the target station includes first information. The first information indicates that a resource unit corresponding to the user field is used for duplicate transmission.

In an implementation, a quantity of duplicate transmissions of the resource unit is pre-specified, or is pre-determined through negotiation with a station before the EHT MU PPDU is sent.

In an implementation, the first information is carried in a bit B15 in the user field that is in the EHT MU PPDU and that corresponds to the target station, or a value of an MCS field in the user field that is in the EHT MU PPDU and that corresponds to the target station is 14, or the value of the MCS field is any one of 16 to 31, to indicate that the resource unit is used for duplicate transmission.

In an implementation, different MCS values indicate different quantities of duplications of the resource unit used for duplicate transmission.

In an implementation, the user field in the EHT MU PPDU further includes second information. The second information indicates the quantity of duplicate transmissions of the resource unit corresponding to the user field.

In an implementation, the first information or the second information or both are carried in one or more of the following bits in the EHT MU PPDU: bits B20 to B25 of a 1^{st} symbol in a universal signal field U-SIG, or a bit B2 or B8 of a 2^{nd} symbol in the U-SIG, or bits B13 to B16 of a 1^{st} symbol in an extremely high throughput signal field EHT-SIG.

In an implementation, the resource unit allocation subfield indicates that the resource unit is used for duplicate transmission.

According to a third aspect, a method for transmitting a trigger frame is provided, and is applied to an access point and a station. In this embodiment of this application, the access point is merely used as an example. The method includes: generating a trigger frame, where the trigger frame indicates a plurality of stations to send an extremely high throughput trigger based physical layer protocol data unit EHT TB PPDU on one or more resource units, and at least one resource unit is used for duplicate transmission; and sending the trigger frame.

In the foregoing technical solution, the trigger frame indicates that the resource unit corresponding to the EHT TB PPDU sent by the at least one station is used for duplicate transmission, to implement a multi-user duplicate transmission mode. This improves receiving performance of a receive end and data transmission reliability.

In an implementation, the method further includes: receiving an EHT TB PPDU from a station; and performing combined decoding on information carried in the at least one resource unit used for duplicate transmission.

In an implementation, association identifiers or station identifiers corresponding to at least two of user information fields included in the trigger frame are the same, to indicate that at least two resource units corresponding to the at least two user information fields are used for duplicate transmission.

In the foregoing possible implementation, same association identifiers or station identifiers in the plurality of user information fields in the trigger frame indicate that corresponding resource units are used for duplicate transmission. This is easy to implement for the receive end and a transmit end.

In an implementation, a value of a modulation and coding scheme MCS field of at least one user field of the at least two user information fields is 15, to indicate that dual carrier modulation is used for the at least two resource units.

In the foregoing possible implementation, a value of an MCS field in the trigger frame may indicate that dual carrier modulation is used for at least two resource units. The indication manner is flexible, and data transmission performance is improved.

In an implementation, a user information field included in the trigger frame includes first information. The first information indicates that a resource unit corresponding to the user information field is used for duplicate transmission.

In the foregoing possible implementation, the first information may be added to the trigger frame, to indicate that the resource unit corresponding to the user field is used for duplicate transmission. This improves flexibility of an indication manner of duplicate transmission.

In an implementation, the first information is carried in a bit B25 in the user information field, or a value of an MCS field in the user information field is 14, or the value of the MCS field is any one of 16 to 31, to indicate that the resource unit corresponding to the user information field is used for duplicate transmission.

In the foregoing possible implementation, that the resource unit corresponding to the user field is used for duplicate transmission is indicated in the trigger frame. This may be indicated by using the bit B25 in the user information field or the value of the MCS field. This improves flexibility of an indication manner of duplicate transmission.

In an implementation, different MCS values indicate different quantities of duplications of the resource unit used for duplicate transmission.

In an implementation, a quantity of duplicate transmissions of the resource unit is pre-specified, or is pre-determined through negotiation with a station before the trigger frame is sent.

In the foregoing possible implementation, the quantity, indicated in the trigger frame, of duplicate transmissions of the resource unit used for duplicate transmission may be flexibly configured. This improves reliability and flexibility of data transmission.

In an implementation, the user information field included in the trigger frame further includes second information. The second information indicates the quantity of duplicate transmissions of the resource unit corresponding to the user information field.

In the foregoing possible implementation, the second information may be added to the trigger frame, to indicate the quantity of duplicate transmissions of the resource unit corresponding to the user information field. This improves flexibility of an indication manner of the quantity of duplicate transmissions.

In an implementation, the second information is carried in some or all bits of a starting spatial stream and/or a number of spatial streams NSS in the user information field.

In the foregoing possible implementation, some or all bits of the starting spatial stream and/or the number of spatial streams NSS in the trigger frame indicate the quantity of duplicate transmissions. The indication manner is flexible and easy to implement.

In an implementation, the first information or the second information or both are carried in one or more of the following bits in the trigger frame: bits B25 to B39 in a special user information list field, or bits B56 to B63 in a common information field.

In the foregoing possible implementation, a reserved field in the trigger frame may indicate that a corresponding resource unit is used for duplicate transmission. The indication manner is flexible and easy to implement.

In an implementation, a resource unit allocation field or a PS 160 MHz primary/secondary indication field or both in a user information field in the trigger frame indicate that a resource unit corresponding to the user information field is used for duplicate transmission.

In the foregoing possible implementation, a specific index of the resource unit allocation field and/or the PS 160 MHz primary/secondary indication field in the trigger frame may indicate that the corresponding resource unit is used for duplicate transmission. The indication manner is flexible and easy to implement.

According to a fourth aspect, a method for transmitting a trigger frame is provided, and is applied to a target station. The method includes: receiving a trigger frame, where the trigger frame indicates a plurality of stations to send an extremely high throughput trigger based physical layer protocol data unit EHT TB PPDU on one or more resource units, and at least one resource unit is used for duplicate transmission; and determining, based on the trigger frame, that a resource unit that corresponds to the target station and that is used to send an EHT TB PPDU is used for duplicate transmission.

In an implementation, the method further includes: sending, on the resource unit used for duplicate transmission, the EHT TB PPDU to an access point.

In an implementation, association identifiers or station identifiers corresponding to at least two of user information fields included in the trigger frame are the same as a station identifier corresponding to the target station, to indicate that at least two resource units corresponding to the at least two user information fields are used for duplicate transmission.

In an implementation, a value of a modulation and coding scheme MCS field of at least one user field of the at least two user information fields that are included in the trigger frame and that correspond to the at least two resource units is 15, to indicate that dual carrier modulation is used for the at least two resource units.

In an implementation, a user information field included in the trigger frame includes first information. The first information indicates that a resource unit corresponding to the user information field is used for duplicate transmission.

In an implementation, the first information is carried in a bit B25 in the user information field, or a value of an MCS field in the user information field is 14, or the value of the MCS field is any one of 16 to 31, to indicate that the resource unit corresponding to the user information field is used for duplicate transmission.

In an implementation, different MCS values indicate different quantities of duplications of the resource unit used for duplicate transmission.

In an implementation, a quantity of duplicate transmissions of the resource unit is pre-specified, or is pre-determined through negotiation with a station before the trigger frame is sent.

In an implementation, the user information field included in the trigger frame further includes second information. The second information indicates the quantity of duplicate transmission of the resource unit corresponding to the user information field.

In an implementation, the second information is carried in some or all bits of a starting spatial stream and/or a number of spatial streams NSS in the user information field.

In an implementation, the first information or the second information or both are carried in one or more of the following bits in the trigger frame: bits B25 to B39 in a special user information list field, or bits B56 to B63 in a common information field.

In an implementation, a resource unit allocation field and a PS 160 MHz primary/secondary indication field in a user information field in the trigger frame indicate that a resource unit corresponding to the user information field is used for duplicate transmission.

According to a fifth aspect, a communication apparatus is provided. The communication apparatus includes a processing module and a transceiver module. The processing module is configured to: generate an extremely high throughput multiple user physical layer protocol data unit EHT MU PPDU, where the EHT MU PPDU includes a resource unit allocation subfield, indicating resource unit allocation of a plurality of stations, and a resource unit corresponding to at least one of the plurality of stations is used for duplicate transmission; and send the EHT MU PPDU.

In an implementation, a user specific field included in the EHT MU PPDU includes a plurality of user fields. One user field includes one station identifier and corresponds to one resource unit. Station identifiers in at least two user fields are the same, to indicate that at least two resource units corresponding to the at least two user fields are used for duplicate transmission.

In an implementation, the at least two resource units are consecutive or inconsecutive.

In an implementation, a value of a modulation and coding scheme MCS field of at least one user field of the at least two user fields that are included in the EHT MU PPDU and that correspond to the at least two resource units is 15, to indicate that dual carrier modulation is used for the at least two resource units.

In an implementation, a user field of the EHT MU PPDU includes first information. The first information indicates that a resource unit corresponding to the user field is used for duplicate transmission.

In an implementation, a quantity of duplicate transmissions of the resource unit is pre-specified, or is pre-determined through negotiation with a station before the EHT MU PPDU is sent.

In an implementation, the first information is carried in a bit B15 in the user field of the EHT MU PPDU, or a value of an MCS field in the user field of the EHT MU PPDU is 14, or the value of the MCS field is any one of 16 to 31, to indicate that the resource unit is used for duplicate transmission.

In an implementation, different MCS values indicate different quantities of duplications of the resource unit used for duplicate transmission.

In an implementation, the user field in the EHT MU PPDU further includes second information. The second information indicates the quantity of duplicate transmissions of the resource unit corresponding to the user field.

In an implementation, the first information or the second information or both are carried in one or more of the following bits in the EHT MU PPDU: bits B20 to B25 of a 1^{st} symbol in a universal signal field U-SIG, or a bit B2 or B8 of a 2^{nd} symbol in the U-SIG, or bits B13 to B16 of a 1^{st} symbol in an extremely high throughput signal field EHT-SIG.

In an implementation, the resource unit allocation subfield indicates that the resource unit is used for duplicate transmission.

According to a sixth aspect, a communication apparatus is provided. The communication apparatus includes a processing module and a transceiver module. The transceiver module is configured to receive an EHT MU PPDU, where the EHT MU PPDU includes a resource unit allocation subfield, indicating resource unit allocation of a plurality of stations, and a resource unit corresponding to at least one of the plurality of stations is used for duplicate transmission. The processing module is configured to: determine, based on the EHT MU PPDU, that a plurality of resource units corresponding to a target station are used for duplicate transmission, and perform combined decoding on information carried in the plurality of resource units.

In an implementation, a user specific field included in the EHT MU PPDU includes a plurality of user fields. One user field includes one station identifier and corresponds to one resource unit. Station identifiers in at least two user fields are the same, to indicate that at least two resource units corresponding to the at least two user fields are used for duplicate transmission.

In an implementation, the at least two resource units are consecutive or inconsecutive.

In an implementation, a value of a modulation and coding scheme MCS field of at least one user field of the at least two user fields that are included in the EHT MU PPDU and that correspond to the at least two resource units is 15, to indicate that dual carrier modulation is used for the at least two resource units.

In an implementation, a user field that is in the EHT MU PPDU and that corresponds to the target station includes first information. The first information indicates that a resource unit corresponding to the user field is used for duplicate transmission.

In an implementation, a quantity of duplicate transmissions of the resource unit is pre-specified, or is pre-determined through negotiation with a station before the EHT MU PPDU is sent.

In an implementation, the first information is carried in a bit B15 in the user field that is in the EHT MU PPDU and that corresponds to the target station, or a value of an MCS field in the user field that is in the EHT MU PPDU and that corresponds to the target station is 14, or the value of the MCS field is any one of 16 to 31, to indicate that the resource unit is used for duplicate transmission.

In an implementation, different MCS values indicate different quantities of duplications of the resource unit used for duplicate transmission.

In an implementation, the user field in the EHT MU PPDU further includes second information. The second information indicates the quantity of duplicate transmissions of the resource unit corresponding to the user field.

In an implementation, the first information or the second information or both are carried in one or more of the following bits in the EHT MU PPDU: bits B20 to B25 of a 1^{st} symbol in a universal signal field U-SIG, or a bit B2 or B8 of a 2^{nd} symbol in the U-SIG, or bits B13 to B16 of a 1^{st} symbol in an extremely high throughput signal field EHT-SIG.

In an implementation, the resource unit allocation subfield indicates that the resource unit is used for duplicate transmission.

According to a seventh aspect, a communication apparatus is provided. The apparatus includes a processing module and a transceiver module. The processing module is configured to generate a trigger frame, where the trigger frame indicates a plurality of stations to send an extremely high throughput trigger based physical layer protocol data unit EHT TB PPDU on one or more resource units, and at least one resource unit is used for duplicate transmission. The transceiver module is configured to send the trigger frame.

In an implementation, the transceiver module is further configured to receive an EHT TB PPDU from a station; and the processing module is further configured to perform combined decoding on information carried in the at least one resource unit used for duplicate transmission.

In an implementation, association identifiers or station identifiers corresponding to at least two of user information fields included in the trigger frame are the same, to indicate that at least two resource units corresponding to the at least two user information fields are used for duplicate transmission.

In an implementation, a value of a modulation and coding scheme MCS field of at least one user field of the at least two user information fields is 15, to indicate that dual carrier modulation is used for the at least two resource units.

In an implementation, a user information field included in the trigger frame includes first information. The first information indicates that a resource unit corresponding to the user information field is used for duplicate transmission.

In an implementation, the first information is carried in a bit B25 in the user information field, or a value of an MCS field in the user information field is 14, or the value of the MCS field is any one of 16 to 31, to indicate that the resource unit corresponding to the user information field is used for duplicate transmission.

In an implementation, different MCS values indicate different quantities of duplications of the resource unit used for duplicate transmission.

In an implementation, a quantity of duplicate transmissions of the resource unit is pre-specified, or is pre-determined through negotiation with a station before the trigger frame is sent.

In an implementation, the user information field included in the trigger frame further includes second information. The second information indicates the quantity of duplicate transmissions of the resource unit corresponding to the user information field.

In an implementation, the second information is carried in some or all bits of a starting spatial stream and/or a number of spatial streams NSS in the user information field.

In an implementation, the first information or the second information or both are carried in one or more of the following bits in the trigger frame: bits B25 to B39 in a special user information list field, or bits B56 to B63 in a common information field.

In an implementation, a resource unit allocation field or a PS160 MHz primary/secondary indication field or both in a user information field in the trigger frame indicate that a resource unit corresponding to the user information field is used for duplicate transmission.

According to an eighth aspect, a communication apparatus is provided. The apparatus includes a processing module and a transceiver module. The transceiver module is configured to receive a trigger frame, where the trigger frame indicates a plurality of stations to send an extremely high throughput trigger based physical layer protocol data unit EHT TB PPDU on one or more resource units, and at least one resource unit is used for duplicate transmission. The processing module is configured to determine, based on the trigger frame, that a resource unit that corresponds to a target station and that is used to send an EHT TB PPDU is used for duplicate transmission.

In an implementation, the transceiver module is further configured to send the EHT TB PPDU to an access point on the resource unit used for duplicate transmission.

In an implementation, association identifiers or station identifiers corresponding to at least two of user information fields included in the trigger frame are the same as a station identifier corresponding to the target station, to indicate that at least two resource units corresponding to the at least two user information fields are used for duplicate transmission.

In an implementation, a value of a modulation and coding scheme MCS field of at least one user field of the at least two user information fields that are included in the trigger frame and that correspond to the at least two resource units is 15, to indicate that dual carrier modulation is used for the at least two resource units.

In an implementation, a user information field included in the trigger frame includes first information. The first information indicates that a resource unit corresponding to the user information field is used for duplicate transmission.

In an implementation, the first information is carried in a bit B25 in the user information field, or a value of an MCS field in the user information field is 14, or the value of the MCS field is any one of 16 to 31, to indicate that the resource unit corresponding to the user information field is used for duplicate transmission.

In an implementation, different MCS values indicate different quantities of duplications of the resource unit used for duplicate transmission.

In an implementation, a quantity of duplicate transmissions of the resource unit is pre-specified, or is pre-determined through negotiation with a station before the trigger frame is sent.

In an implementation, the user information field included in the trigger frame further includes second information. The second information indicates the quantity of duplicate transmissions of the resource unit corresponding to the user information field.

In an implementation, the second information is carried in some or all bits of a starting spatial stream and/or a number of spatial streams NSS in the user information field.

In an implementation, the first information or the second information or both are carried in one or more of the following bits in the trigger frame: bits B25 to B39 in a special user information list field, or bits B56 to B63 in a common information field.

In an implementation, a resource unit allocation field or a PS160 MHz primary/secondary indication field or both in a user information field in the trigger frame indicate that a resource unit corresponding to the user information field is used for duplicate transmission.

According to a ninth aspect, a communication apparatus is provided. The communication apparatus includes a processor and a communication interface. The communication interface is configured to communicate with a module outside the communication apparatus. The processor is configured to run a computer program or instructions, to implement the method according to any one of the first aspect, or to implement the method according to any one of the third aspect. According to a tenth aspect, a communication apparatus is provided. The communication apparatus includes a processor and a communication interface. The communication interface is configured to communicate with a module outside the communication apparatus. The processor is configured to run a computer program or instructions, to implement the method according to any one of the second aspect, or to implement the method according to any one of the fourth aspect. According to an eleventh aspect, a computer-readable storage medium is provided. The computer-readable storage medium includes computer program instructions. When the computer program instructions are run on a communication apparatus, the communication apparatus is enabled to perform the method according to any one of the first aspect, or the communication apparatus is enabled to perform the method according to any one of the third aspect.

According to a twelfth aspect, a computer-readable storage medium is provided. The computer-readable storage medium includes a computer program. When the computer program runs on a computer, the computer is enabled to perform the method according to any one of the second aspect, or the computer is enabled to perform the method according to any one of the fourth aspect. According to a thirteenth aspect, a computer program product is provided. When the computer program product is run on a communication apparatus, the communication apparatus is enabled to perform the method according to any one of the first aspect or the third aspect.

According to a fourteenth aspect, a computer program product is provided. When the computer program product is run on a communication apparatus, the communication apparatus is enabled to perform the method according to any one of the second aspect or the fourth aspect.

According to a fifteenth aspect, a communication system is provided. The communication system includes the communication apparatus according to the fifth aspect and the communication apparatus according to the sixth aspect.

According to a sixteenth aspect, a communication system is provided. The communication system includes the communication apparatus according to the seventh aspect and the communication apparatus according to the eighth aspect.

It may be understood that the communication apparatus, the computer-readable storage medium, the computer program product, and the communication system provided above may be implemented by using the corresponding method provided above. Therefore, for beneficial effects that can be achieved by the communication apparatus, the computer-readable storage medium, the computer program product, and the communication system, refer to the beneficial effects in the corresponding method provided above. Details are not described herein again.

### BRIEF DESCRIPTION OF DRAWINGS

FIG. 1 is a schematic diagram of a frame structure of an EHT MU PPDU according to an embodiment of this application;
FIG. 2 is a detailed schematic diagram of a frame structure of an EHT MU PPDU according to an embodiment of this application;
FIG. 3A and FIG. 3B is a schematic diagram of a frame structure of a trigger frame according to an embodiment of this application;
FIG. 4 is a schematic diagram of a frame structure of an EHT TB PPDU according to an embodiment of this application;
FIG. 5 is a diagram of an architecture of a WLAN communication system according to an embodiment of this application;
FIG. 6 is a schematic diagram of composition of a communication apparatus according to an embodiment of this application;
FIG. 7 is a schematic diagram of a method for transmitting a physical layer protocol data unit according to an embodiment of this application;
FIG. 8 is a schematic diagram of a frame structure of an EHT MU PPDU used for resource unit duplicate transmission according to an embodiment of this application;
FIG. 9 is a schematic diagram of RU duplicate transmission of an EHT MU PPDU according to an embodiment of this application;
FIG. 10 is a schematic diagram of another method for transmitting a trigger frame according to an embodiment of this application;
FIG. 11A and FIG. 11B is a schematic diagram of a frame structure of a trigger frame used for resource unit duplicate transmission according to an embodiment of this application;
FIG. 12 is a schematic diagram of RU duplicate transmission of an EHT TB PPDU according to an embodiment of this application;
FIG. 13 is a schematic diagram of a structure of a communication apparatus according to an embodiment of this application; and
FIG. 14 is a schematic diagram of a structure of another communication apparatus according to an embodiment of this application.

### DESCRIPTION OF EMBODIMENTS

In descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, in embodiments of this application, words such as "first" and "second" are used for distinguishing between same items or similar items that have basically same functions or purposes. A person skilled in the art may understand that the words such as "first" and "second" do not limit a quantity or an execution sequence, and the words such as "first" and "second" do not indicate a definite difference.

It should be noted that, in this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, the term such as "example" or "for example" is intended to present a related concept in a specific manner.

Embodiments of this application may be applicable to a wireless local area network (wireless local area network, WLAN) scenario, and may be applicable to the IEEE 802.11 system standard, for example, the 802.11a/b/g standard, the 802.11n standard, the 802.11ac standard, the 802.11ax standard, or a next-generation standard, for example, the 802.11be standard or a further next-generation standard. Alternatively, embodiments of this application may be applied to a wireless local area network system, for example, an internet of things (internet of things, IoT) network or a vehicle to X (Vehicle to X, V2X) network. Certainly, embodiments of this application are further applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, and a future 5th generation (5th generation, 5G) communication system. For ease of understanding, the following first briefly describes technical terms in embodiments of this application.

The WLAN starts from 802. 11a/b/g and goes through 802.11n, 802.11ac, and 802.11ax to 802.11be that is under discussion. The 802.1 1ax standard is referred to as high efficient (High Efficient, HE), and the 802.11be standard is referred to as extremely high throughput (Extremely High Throughput, EHT). 802.11be and later standards may be referred to as EHT+.

In 802.11be, two EHT physical layer protocol data unit (physical protocol data unit, PPDU) formats are defined, including an EHT MU PPDU and an EHT TB PPDU. The EHT MU PPDU may support single-user (downlink or uplink) and multi-user (downlink) data transmission. The EHT TB PPDU is another format of an EHT PPDU sent by one or more STAs based on a trigger of a trigger frame sent by an AP.

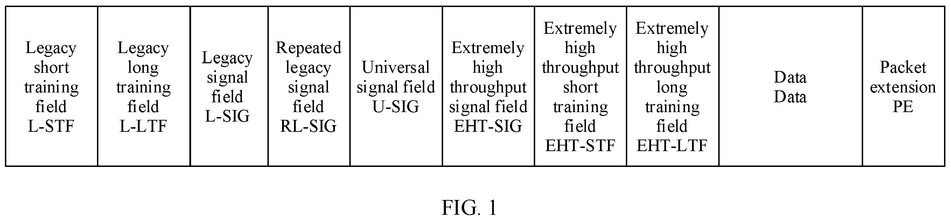

FIG. 1 shows a structure of an EHT MU PPDU that may be used in 802. 1 1be. The EHT MU PPDU may include three parts: a legacy preamble (legacy preamble, L-preamble), an extremely high throughput preamble (extremely high throughput preamble, EHT-preamble), and a physical layer convergence protocol service data unit (physical layer convergence protocol service data unit, PSDU).

The L-preamble part includes an L-STF field, an L-LTF field, and an L-SIG field. The EHT-preamble part includes an RL-SIG field and a universal field (universal SIG, U-SIG), an extremely high throughput signal (EHT-SIG) field, an extremely high throughput short training field (extremely high throughput short training field, EHT-STF), and an extremely high throughput long training field (extremely high throughput long training field, EHT-LTF). The PSDU part includes fields such as data (data).

Specifically, for meanings of fields in the EHT MU PPDU, refer to the following Table 1.

**Table 1 Meanings of fields in an EHT MU PPDU**

| Field | Indicated meaning |
|---|---|
| L-STF legacy short training field | Used for PPDU discovery, coarse synchronization, and automatic gain control |
| L-LTF legacy long training field | Used for fine synchronization and channel estimation |
| L-SIG legacy signal field | Used for carrying signaling information related to a PPDU length, to ensure coexistence |
| RL-SIG repeated legacy signal field | Duplication of an L-SIG field |
| U-SIG universal signal field | A universal signal field, used to carry signaling for demodulating subsequent data, where the signaling includes some indication information of the EHT-SIG |
| EHT-SIG extremely high throughput signal field | Used for carrying signaling for demodulating subsequent data, and mainly including resource unit indication information of one or more target users |
| EHT-STF extremely high throughput short training field | Used for performing automatic gain control of a subsequent field |
| EHT-LTF extremely high throughput long training field | Used for channel estimation |
| Data (data) | Used for carrying data information |
| Packet extension PE | Used for increasing processing time of a receiver |

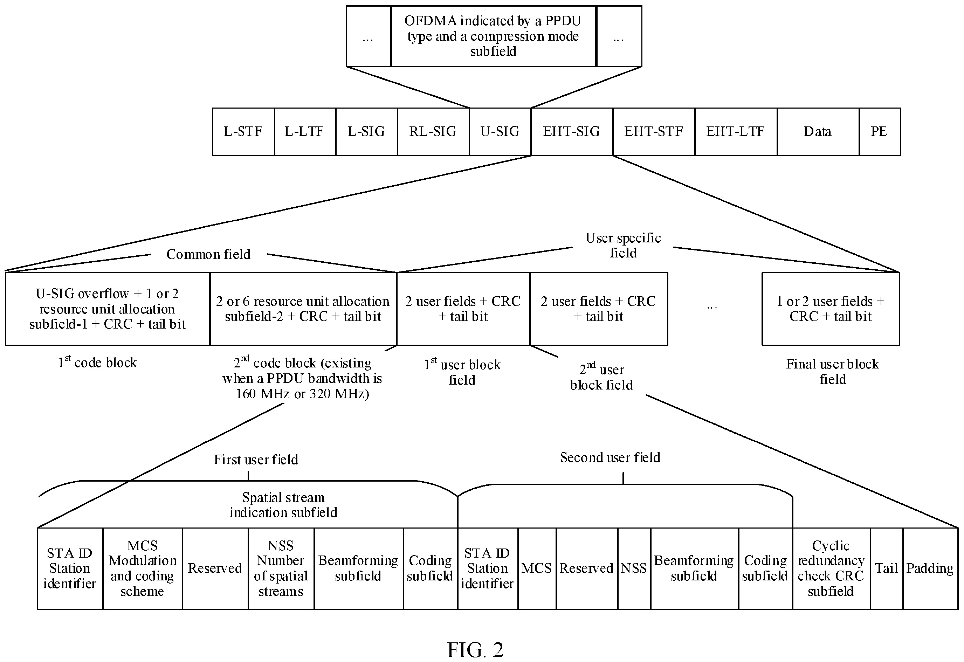

In a possible implementation, as shown in FIG. 2, the EHT-SIG field includes a common field and a user specific field. The common field may be used to carry resource allocation information allocated to a STA. The user specific field may be used to carry user information. Optionally, the PPDU may further include PE.

Specifically, the common field includes a resource unit allocation subfield-1 (RU Allocation subfield-1). When a bandwidth is greater than or equal to 160 MHz, the common field may further include a resource unit allocation subfield-2, and include a cyclic redundancy code (Cyclic Redundancy Code, CRC) used for check and a tail (Tail) subfield used for cyclic decoding. A resource unit allocation subfield (the resource unit allocation subfield-1 and/or the resource unit allocation subfield-2) indicates allocation of predetermined resource units into which the entire PPDU bandwidth is divided. In other words, the resource units of the PPDU bandwidth are divided based on a predetermined location and size, and the resource unit allocation subfield (the resource unit allocation subfield-1 and/or the resource unit allocation subfield-2) indicates allocation of the resource units in the PPDU bandwidth.

For a signaling indication of the EHT MU PPDU, there is a PPDU type and compression mode field in the U-SIG. When the PPDU type and compression mode field is 1, it indicates that the EHT MU PPDU is single-user transmission. When the PPDU type and compression mode field is 0, it indicates that the EHT MU PPDU is multi-user transmission. In the EHT MU PPDU for single-user transmission, the EHT-SIG has only one user field. In the EHT MU PPDU for multi-user transmission, the EHT-SIG includes 2 to M user fields, where M may be a positive integer greater than or equal to 2.

In the EHT MU PPDU for multi-user transmission, corresponding to an allocation sequence of a plurality of resource units indicated in a resource unit allocation subfield, a user specific field (User Specific field) includes 2 to M user fields (User Fields), to indicate which users (namely, stations) the resource units are allocated.

Each user field includes an association identifier of a target user, to indicate a target station (namely, the target user). In addition, the user field further includes an indication field such as a modulation and coding scheme (Modulation and Coding Scheme, MCS).

In addition, every two of the M user fields usually form a group, and every two user fields are followed by a CRC and a tail field. If M is an odd number, there is one user field in a last group; or if M is an even number, there are still two user fields in a last group.

It should be understood that the EHT-MU-PPDU is merely an example. In a standard formulation process or a technology development process, there may be another structure. This is not limited in this application.

In addition, the EHT TB PPDU is another format of an EHT PPDU sent by one or more STAs based on a trigger of a trigger frame sent by an AP. A specific format is described below, and details are not described herein.

Trigger frame (Trigger Frames): An AP may allocate a resource unit (resource unit, RU) to one or more STAs by using a trigger frame.

Multi-user transmission in 802.11be is based on an orthogonal frequency division multiple access (orthogonal frequency division multiple access, OFDMA) technology. With the use of the OFDMA technology, a transmission bandwidth is divided into a series of mutually orthogonal and nonoverlapping subcarrier sets, and different subcarrier sets may be allocated to different users to implement multiple access. These subcarriers are allocated to different combinations. Such combinations are referred to as resource units (Resource Units, RUs).

The following are different RUs or MRUs defined in uplink and downlink: a 26-tone RU, a 52-tone RU, a 52+26-tone MRU, a 106-tone RU, a 106+26-tone MRU, a 242-tone RU, a 484-tone RU, a 484+242-tone MRU, a 996-tone RU, a 996+484-tone MRU, a 996+484+242-tone MRU, a 2*996-tone RU, a 2*996+484-tone MRU, a 3*996-tone MRU, a 3*996+484-tone MRU, a 4*996-tone RU, and the like.

During trigger-based multi-user uplink transmission, the AP may indicate, by using a trigger frame, a resource unit that is allocated to one or more STAs and that is used for uplink transmission. This also means that the AP may schedule a resource unit for one or more STAs by using a trigger frame. Specifically, a process in which the AP schedules the resource unit for the one or more STAs by using the trigger frame may include the following steps.

Step 1: The AP sends a trigger frame, where the trigger frame includes resource unit allocation information and another parameter that are used by the one or more STAs to send an EHT TB PPDU.

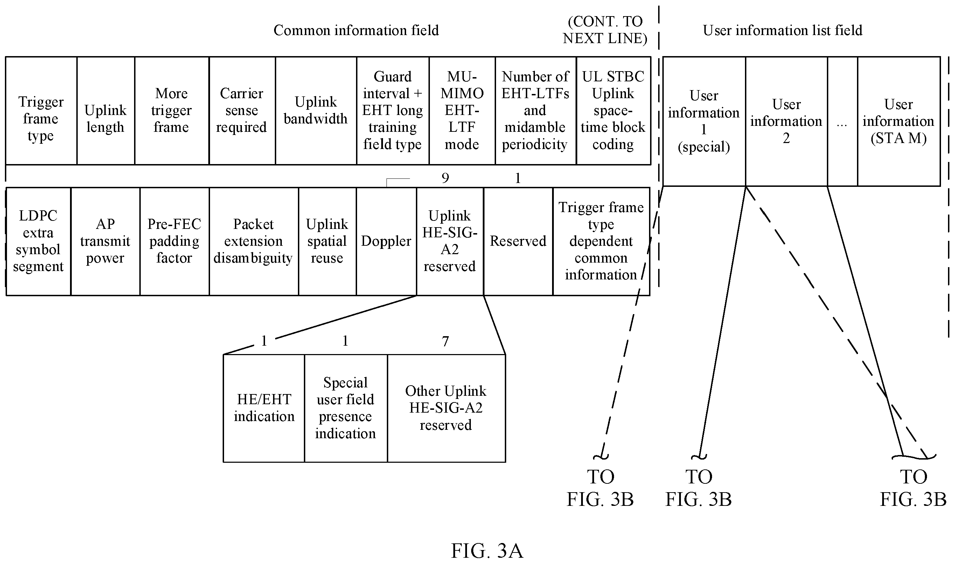

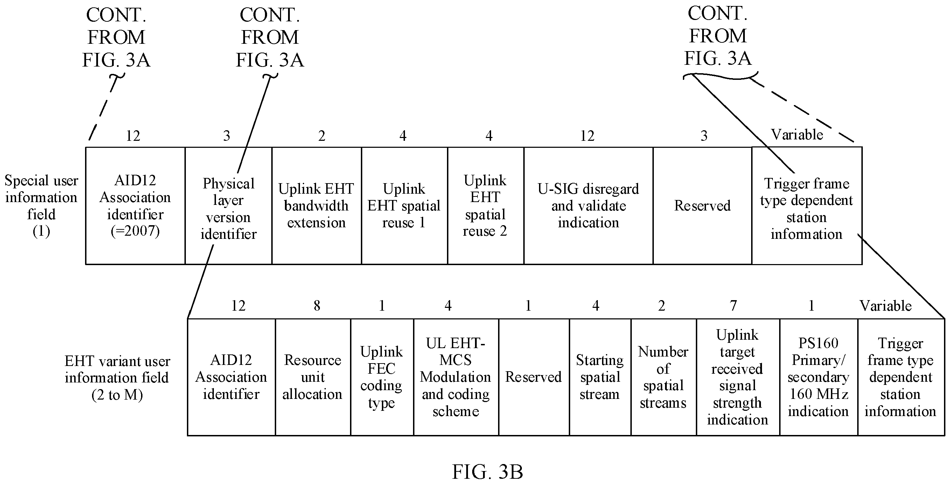

For a structure of the trigger frame, refer to FIG. 3A and FIG. 3B. The trigger frame includes a common information field and a user information list field.

The common information field includes a trigger frame type subfield, an uplink length subfield, an uplink bandwidth subfield, a reserved subfield, and the like, and is used to carry scheduling-related common information of the one or more STAs.

The user information list field includes 1 to M user information fields (briefly referred to as user information field). The user information field may include a special user information field, and an AID identifier is 2007. The user information field indicates resource unit allocation of a plurality of stations (users) and other related information. In addition to the special user information field, each user information field includes an association identifier subfield, a resource unit allocation subfield, a modulation and coding scheme (Modulation and Coding Scheme, MCS) subfield, a starting spatial stream subfield, a number of spatial streams (Number of Spatial Streams, NSS) subfield, a reserved subfield, and the like.

Step 2: The STA receives the trigger frame, parses out, from the trigger frame, a user information field that matches the association identifier of the station, and then sends an EHT TB PPDU on a resource unit indicated by a resource unit allocation subfield in the user information field.

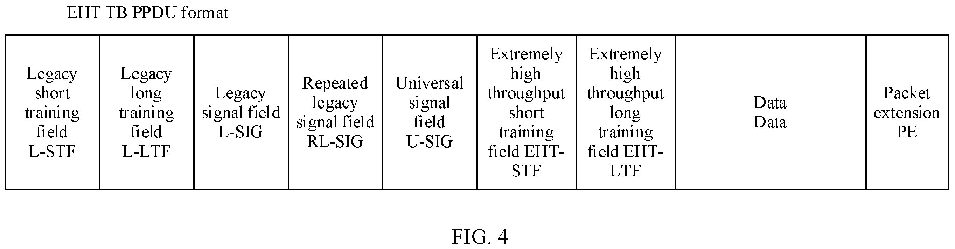

For example, a frame structure of the EHT TB PPDU may be shown in FIG. 4, including a legacy short training field L-STF, a legacy long training field L-LTF, a legacy signal field L-SIG, a repeated legacy signal field RL-SIG, a universal signal field U-SIG, an extremely high throughput short training field EHT-STF, an extremely high throughput long training field EHT-LTF, and data (data), and optionally, further including packet extension PE.

The EHT TB PPDU does not include an EHT-SIG. Because scheduling information of the STA is sent by the AP to the STA, the STA does not need to include the scheduling information in the EHT TB PPDU.

Step 3: Optionally, the AP receives the EHT TB PPDU sent by the STA, and sends an acknowledgment frame to the STA.

The AP successfully parses out data from the EHT TB PPDU, and sends the acknowledgment frame to the STA.

The following briefly describes an implementation environment and an application scenario of embodiments of this application.

This application provides a WLAN communication system to which embodiments of this application are applicable. The WLAN communication system includes at least one wireless access point AP, and a plurality of stations (stations, STAs) associated with the AP. It should be noted that the STA in embodiments of this application may also be referred to as a terminal, and the STA and the terminal may be interchangeable. This is not specifically limited in methods provided in this application.

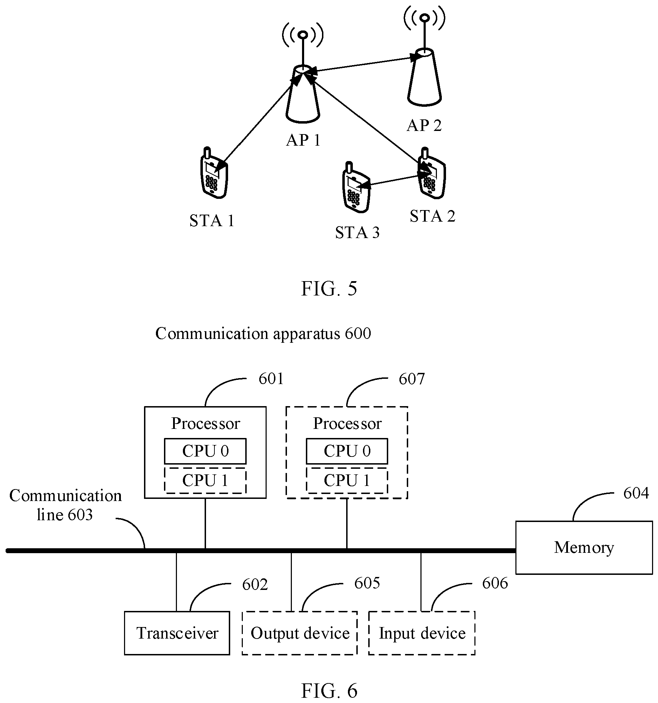

As an example, FIG. 5 is a diagram of an architecture of a WLAN communication system according to this application. FIG. 5 shows an example in which the WLAN communication system includes at least one AP, for example, an AP 1 and an AP 2, and the AP 1 is associated with a STA 1, a STA 2, and a STA 3. The AP 1 may schedule a radio resource for an associated STA and/or an unassociated STA, and transmit data for the STA on the scheduled radio resource. For example, the AP 1 may schedule radio resources for the STA 1, the STA 2, the STA 3, and the like, and transmit data for the STA 1, the STA 2, and the STA 3 on the scheduled radio resources, including uplink data information and/or downlink data information.

In addition, embodiments of this application may be applicable to communication between an AP and a STA, for example, multicast communication between the AP and the STA 1, the STA 2, and the STA 3, and unicast communication between the AP and a STA 4 or a STA 5. Alternatively, embodiments of this application may be applicable to communication between STAs, for example, communication between the STA 4 and the STA 5.

The STA in embodiments of this application may be a wireless communication chip, a wireless sensor, or a wireless communication terminal. For example, the STA may be a user terminal, a user apparatus, an access apparatus, a subscriber station, a subscriber unit, a mobile station, a user agent, or a user device that supports a Wi-Fi communication function. The user terminal may include various handheld devices, vehicle-mounted devices, wearable devices, internet of things (internet of things, IoT) devices, or computing devices that have a wireless communication function, or other processing devices connected to a wireless modem, and various forms of user equipment (user equipment, UE), mobile stations (mobile stations, MSs), terminals (terminals), terminal equipment (terminal equipment), portable communication devices, handheld devices, portable computing devices, entertainment devices, game devices or systems, global positioning system devices, or any other proper devices configured to perform network communication through a wireless medium, and the like. Moreover, the STA may support the 802.11be standard. The STA may also support a plurality of WLAN standards such as 802.11ax, 802.11ac, 802.11n, 802.11g, 802.11b, and 802.11a, or a next generation of the 802.11be standard.

The AP in embodiments of this application may be an apparatus that is deployed in a wireless communication network to provide a wireless communication function for a STA associated with the AP. The AP is mainly deployed at home, in a building, and in a park. A typical coverage radius is tens of meters to 100-odd meters. Certainly, the AP may be alternatively deployed outdoors. The AP is equivalent to a bridge that connects a wired network and a wireless network. A main function of the AP is to connect various wireless network clients together and then connect the wireless network to the Ethernet. Specifically, the AP may be a communication device with a Wi-Fi chip, for example, a base station, a router, a gateway, a repeater, a communication server, a switch, or a bridge. The base station may include various forms of macro base stations, micro base stations, relay stations, or the like. Moreover, the AP may support the 802.11be standard. The AP may also support WLAN standards such as 802.11ax, 802.11ac, 802.11n, 802.11g, 802.11b, and 802.11a, or a next generation of the 802.11be standard. This is not limited in this application.

In some embodiments, the AP and the STA in this application may be collectively referred to as a WLAN device. In specific implementation, the WLAN device may use a composition structure shown in FIG. 6, or include components shown in FIG. 6.

FIG. 6 is a schematic diagram of composition of a WLAN device 600 according to an embodiment of this application. The WLAN device 600 may be a STA or a chip or a chip system (or referred to as a system on chip) in a STA. Alternatively, the WLAN device 600 may be an AP or a chip or a chip system (or referred to as a system on chip) in an AP. In this embodiment of this application, the chip system may include a chip, or may include a chip and another discrete device.

As shown in FIG. 6, the WLAN device 600 includes a processor 601, a transceiver 602, and a communication line 603. Further, the WLAN device 600 may further include a memory 604. The processor 601, the memory 604, and the transceiver 602 may be connected through the communication line 603.

The processor 601 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 601 may be another apparatus having a processing function, for example, a circuit, a device, or a software module. This is not limited.

The transceiver 602 is configured to communicate with another device or another communication network. The another communication network may be the Ethernet, a radio access network (radio access network, RAN), a WLAN, or the like. The transceiver 602 may be a module, a circuit, a transceiver, or any apparatus that can implement communication.

The communication line 603 is configured to transmit information between the components included in the WLAN device 300.

The memory 604 is configured to store instructions. The instructions may be a computer program. The memory 304 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, a disc, a digital versatile disc, a Blu-ray disc, or the like), a magnetic disk storage medium or another magnetic storage device, or the like. This is not limited.

It should be noted that the memory 604 may be independent of the processor 601, or may be integrated with the processor 601. The memory 604 may be configured to store instructions, program code, some data, or the like. The memory 604 may be located inside the WLAN device 600, or may be located outside the WLAN device 600. This is not limited. The processor 601 is configured to execute the instructions stored in the memory 604, to implement a method provided in the following embodiments of this application.

In an example, the processor 601 may include one or more CPUs, for example, a CPU 0 and a CPU 1 in FIG. 6.

In an optional implementation, the WLAN device 600 includes a plurality of processors. For example, in addition to the processor 601 in FIG. 6, the WLAN device 600 may further include a processor 607.

In an optional implementation, the WLAN device 600 further includes an output device 605 and an input device 606. For example, the input device 606 is a keyboard, a mouse, a microphone, a joystick, or the like. The output device 605 is a display, a speaker (speaker), or the like.

It may be understood that the composition structure shown in FIG. 6 does not constitute a limitation on the WLAN device. In addition to the components shown in FIG. 6, the WLAN device may include more or fewer components than those shown in the figure, or some components may be combined, or a different component layout may be used.

The following describes the technical solution in embodiments of this application with reference to the accompanying drawings.

It should be noted that lengths of fields in this application are merely examples for description. In this application, the lengths of the fields are not limited to the lengths provided in this application. The lengths of the fields may be longer or shorter than the lengths provided in this application.

It should be noted that, in the following embodiments of this application, names of messages between apparatuses, names of parameters, names of information, or the like are merely examples, and may be other names in another embodiment. This is not specifically limited in the method provided in this application.

It may be understood that, in embodiments of this application, an access point and/or a STA may perform some or all steps in embodiments of this application. These steps or operations are merely examples. In embodiments of this application, other operations or variations of various operations may be further performed. Moreover, the steps may be performed in a sequence different from that shown in embodiments of this application, and possibly, not all the operations in embodiments of this application need to be performed.

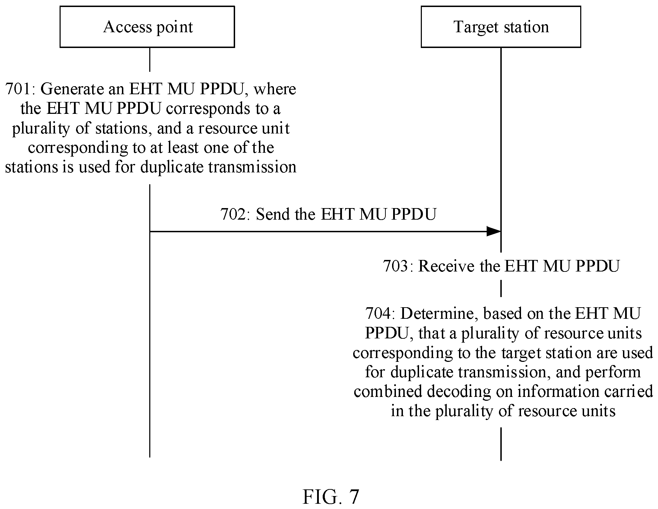

FIG. 7 is a schematic flowchart of an indication method for resource unit duplicate transmission according to an embodiment of this application. An example in which the method provided in this embodiment of this application is applied to the application scenario shown in FIG. 6 is used below. Certainly, this embodiment of this application may also be applied to another possible communication scenario or communication system.

In this application, an EHT MU PPDU format for multi-user transmission is improved in design, and a resource unit corresponding to at least one station is indicated in the EHT MU PPDU to be used for duplicate transmission, to implement an RU duplicate transmission mode. This improves receiving performance of a receive end and data transmission reliability. According to the technical solution of this application, only one of a plurality of stations uses duplicate transmission, or at least two of the plurality of stations use duplicate transmission.

It should be understood that duplicate transmission in embodiments of this application may also be referred to as duplicated transmission (duplicated transmission).

Specifically, as shown in FIG. 7, the indication method for resource unit duplicate transmission provided in this application includes the following steps.

701: An access point generates an EHT MU PPDU, where the EHT MU PPDU corresponds to a plurality of stations, and a resource unit corresponding to at least one of the stations is used for duplicate transmission.

It can be learned from the foregoing description that the resource unit allocation subfield in the EHT MU PPDU indicates resource unit allocation of the plurality of stations, that is, indicates a plurality of resource units obtained by dividing frequency domain resources corresponding to the EHT MU PPDU based on a sequence. The resource units of an EHT MU PPDU bandwidth are divided based on a predetermined location and size.

In addition, as shown in FIG. 2, the user specific field included in the EHT MU PPDU includes a plurality of user fields, and an allocation sequence of the plurality of resource units correspond to the plurality of user fields in the user specific field. In other words, one user field corresponds to one resource unit. One user field includes one station identifier.

In this embodiment of this application, specific indication information in the EHT MU PPDU indicates that a resource unit corresponding to at least one station is used for duplicate transmission. In an implementation, station identifiers in at least two user fields are the same, to indicate that at least two resource units corresponding to the at least two user fields are used for duplicate transmission.

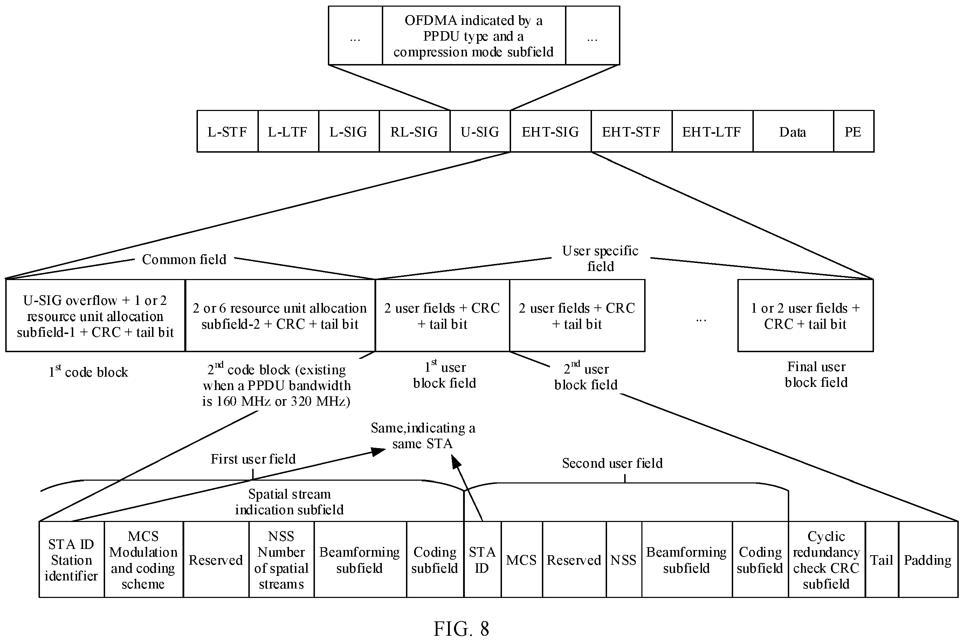

With reference to FIG. 8, in the user specific field of the EHT MU PPDU, a station identifier included in a first user field is AD1, and a station identifier included in a second user field is still AD1. This indicates that a first resource unit and a second resource unit in the resource unit allocation subfield in the EHT MU PPDU are used by the stations whose station identifiers are AD1 to perform duplicate transmission on the first resource unit and the second resource unit. That the plurality of resource units are used for duplicate transmission in this embodiment of this application means that a same data bit is transmitted on the plurality of resource units. To be specific, one data bit is duplicated and transmitted a plurality of times on data subcarriers included in the plurality of resource units.

In other words, in an EHT-SIG, station identifiers (for example, association identifiers) in user fields corresponding to a plurality of RUs are the same, to indicate that the plurality of RUs are allocated to a same STA, and duplicate transmission is used for the plurality of RUs.

For example, a 20 MHz EHT MU PPDU may be allocated into a 52-tone RU, a 52-tone RU, a 26-tone RU, and a 106-tone RU. The first 52-tone RU corresponds to the first user field, the second 52-tone RU corresponds to the second user field, and so on. In an implementation solution of this application, the AP may allocate both the first 52-tone RU and the second 52-tone RU to a same STA, to be specific, same station identifiers are indicated in two user fields respectively corresponding to the two 52-tone RUs, to indicate that the two RUs are allocated to the same STA, and duplicate transmission is used for data or a data bit of the STA on the two 52-tone RUs. In other words, one copy of the data or data bit of the STA is transmitted on one 52-tone RU, and another copy of the data or data bit is transmitted on the other 52-tone. Alternatively, the data or data bit of the STA is duplicated to obtain two copies that are transmitted on the two 52-tone RUs. In addition, the AP may allocate the 26-tone RU corresponding to a third user field and the 106-tone RU corresponding to a fourth user field respectively to other two users. RU duplicate transmission may not be performed on the two resource units.

Further, a dual carrier modulation (Dual Carrier Modulation, DCM) technology may alternatively be used. The DCM is to repeatedly transmit one data bit on two subcarriers at the same time, that is, one data bit is modulated to two subcarriers.

In an implementation, dual carrier modulation is used for a data bit carried in the resource unit.

In another implementation, the AP may indicate, by using a value of an MCS field in a user field of the EHT MU PPDU, that dual carrier modulation is used for a data bit carried in a corresponding resource unit. For example, if the value of the MCS field is 15, it indicates that dual carrier modulation is used for the corresponding resource unit.

For brevity, in this embodiment of this application, that dual carrier modulation is used for a data bit carried in a resource unit is briefly referred to as that dual carrier modulation is used for a resource unit.

In a specific implementation, for the at least two resource units that are included in the EHT MU PPDU and that are used for duplicate transmission, a value of an MCS field of at least one user field of the at least two user fields corresponding to the at least two resource units is 15, to indicate that dual carrier modulation is used for the at least two resource units.

In addition, for RU duplicate transmission, in a plurality of user fields corresponding to a plurality of resource units used for duplicate transmission, a number of spatial streams NSS of one of the user fields may be set to 1, and a number of spatial streams subfield may be indicated as 0, or the NSS is not indicated and is used as a reserved field. Other indication information, such as an MCS subfield, a reserved subfield, an NSS subfield, a beamforming subfield, and an encoding subfield, in the plurality of user fields corresponding to RU duplicate transmission may be the same, that is, corresponding modulation parameters are the same. Alternatively, other indication information may be indicated only in one of the plurality of user fields, and fields corresponding to the other indication information in the other user fields are used as reserved fields. This is not specifically limited in this application.

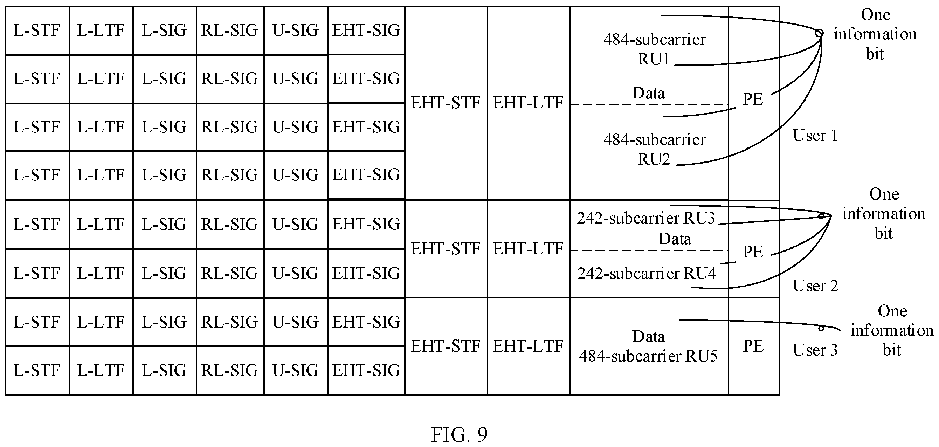

For example, FIG. 9 is a schematic diagram of RU duplicate transmission of an EHT MU PPDU. A transmission bandwidth of the EHT MU PPDU is 160 MHz. The AP may divide the entire bandwidth into a 484-subcarrier RU1, a 484-subcarrier RU2, a 242-subcarrier RU3, a 242-subcarrier RU4, and a 484-subcarrier RU5. It is indicated in the RUs of the EHT MU PPDU that: RU duplicate transmission is used, by a user 1, on the first two RUs, namely, the 484-subcarrier RU1 and the 484-subcarrier RU2, and dual carrier modulation is used; RU duplicate transmission is used, by a user 2, on the 242-subcarrier RU3 and the 242-subcarrier RU4, and dual carrier modulation is used; and common transmission, namely, non-duplicate transmission, is performed, by a user 3, on the 484-subcarrier RU5.

The 484 subcarriers include 468 data subcarriers and 16 pilot subcarriers. The data subcarriers are used to carry data information, and the pilot subcarriers are used to transfer a predetermined value, so that the receive end corrects a frequency offset, a phase noise, and the like. As shown in FIG. 9, same data is transmitted on 468 data subcarriers of each of the two 484-tone RUs. In addition, dual carrier modulation may be used for data bits, to be specific, each of the 234 data bits is modulated to two subcarriers, and the 468 data subcarriers are occupied. Therefore, on the data subcarriers of the two 484-tone RUs, one data bit is duplicated twice in frequency domain, and dual carrier modulation is repeated twice, that is, one data bit is duplicated and transmitted four times. In this way, the receive end can perform combined reception. This provides a four-fold data receiving gain.

In an implementation, the at least two resource units used for duplicate transmission may be consecutive, or may be inconsecutive. For example, in the 484-tone RU (1), 484-tone RU (2), 242-tone RU, the 242-tone RU, and the 484-tone RU (3) included in the 160 MHz, it may be indicated in the RUs of the EHT MU PPDU that: RU duplicate transmission is used, by the user 1, on the first 484-tone RU (1) and the last 484-tone RU (3). Common transmission, namely, non-duplicate transmission, is performed, by the user 2, on the second 484-tone RU (2).

In addition, the EHT-SIG in the EHT MU PPDU is transmitted in a unit of 20 MHz in frequency domain, to be specific, an L-STF, an L-LTF, an L-SIG, an RL-SIG, a U-SIG, and the EHT-SIG in the EHT MU PPDU are transmitted in a unit of 20 MHz. For example, the L-STF, the L-LTF, the L-SIG, the RL-SIG, the U-SIG, and the EHT-SIG may be duplicated and transmitted four times on the entire 80 MHz, and a four-fold data receiving gain (6 dB) is provided; and the EHT-SIG may be duplicated and transmitted eight times on the entire 160 MHz, and an eight-fold data receiving gain is provided.

On this basis, content transmitted in a bandwidth of 20 MHz in the EHT-SIG may be represented by using a content channel (Content Channel, CC). When the bandwidth of the EHT MU PPDU is 20 MHz, the EHT-SIG has one CC. When the bandwidth of the EHT MU PPDU is 40 MHz, the EHT-SIG has two CCs that are respectively CC1 and CC2 in ascending order of frequencies. Formats of signal fields in the two content channels are the same, but content may be different. When the bandwidth of the EHT MU PPDU is 80 MHz, there are still two CCs, and there are four channels in total. Therefore, resource unit allocation information is indicated on the four channels in ascending order of frequencies based on a structure of CC1, CC2, CC1, and CC2 on the whole. When the bandwidth of the EHT MU PPDU is 160 MHz or above, there are two content channels in each 80 MHz. In different 80 MHz, content of the EHT-SIG may be different.

Therefore, for a plurality of RUs on which RU duplicate transmission is used, each RU on which RU duplicate transmission is performed may be used to represent duplicate transmission. For example, when two 52-tone RUs duplicate and transmit a data bit of a STA, the data bit of the STA is duplicated twice. Alternatively, a combined large RU of a plurality of RUs that can cover duplicate transmission may be used for description. In this case, the combined large RU corresponds to only one user field. For example, duplicate transmission of a 106-tone RU indicates duplicate transmission of two 52-tone RUs, to be specific, a data bit of a STA corresponding to the 106-tone RU is duplicated and transmitted twice on the two 52-tone RUs. For example, if the AP indicates that a 52-tone RU is duplicated and transmitted four times, the AP may indicate, by using the EHT MU PPDU, that four 52-tone RUs are used for duplicate transmission, to duplicate data bits carried in the 52-tone RU to the four 52-tone RUs for transmission four times; or the AP may indicate a combined large RU, for example, a 242-tone RU, of a plurality of RUs are used for duplicate transmission, to duplicate data bits carried in the 52-tone RU four times to the 242-tone RU for transmission. A specific indication manner is described below. Details are not described herein again.

For example, a multiple of RU duplication is equal to a quantity of times a station identifier in a user field is repeated on the CC1 and the CC2 in a specific 80 MHz. It should be noted that the CC2 exists only when the bandwidth of the PPDU is greater than 20 MHz.

In addition, in duplicate transmission, different RUs may further use one or more of the following methods: different interleavers, different encode puncture modes, or different subcarrier mapping adjustment orders, to increase diversity, improve data transmission reliability, and reduce a peak to average power ratio (Peak to Average Power Ratio, PAPR).

702: The access point sends the EHT MU PPDU.

703: A target station receives the EHT MU PPDU.

704: The target station determines, based on the EHT MU PPDU, that a plurality of resource units corresponding to the target station are used for duplicate transmission, and performs combined decoding on information carried in the plurality of resource units.

The target station may determine, based on an indication for duplicate transmission in the EHT MU PPDU, that the plurality of resource units corresponding to the target station are used for duplicate transmission, so that combined decoding is performed on the information carried in the plurality of resource units, that is, a combination operation is performed on different subcarriers that carry a same data bit, to improve data receiving reliability.

Based on the implementation in step 701, the target station may determine, based on a quantity of a station identifier that is of the target station and that is included in the user fields in the EHT MU PPDU, that the plurality of resource units corresponding to the target station are used for duplicate transmission, so that combined decoding is performed on data carried in the plurality of resource units corresponding to the plurality of user fields.

According to the foregoing implementation of this application, an RU duplicate transmission mechanism of one or more of a plurality of users may be added to the AP in an OFDMA transmission scenario. This improves data reliability of the receive end, and compensates for a problem of low data reliability caused by a transmit power limitation in a low-power scenario.

In addition, a plurality of user fields in the EHT MU PPDU are the same, to indicate that a plurality of corresponding RUs are used for duplicate transmission. This is easy to implement for the receive end and a transmit end. Moreover, in the EHT MU PPDU, the resource unit allocation subfield accurately reflects a location of a pilot subcarrier, so that a third-party station may further estimate a center frequency deviation or a phase deviation by using a pilot subcarrier in an RU corresponding to another station, to improve data receiving performance. In the technical solution of this application, a plurality of RUs for duplicate transmission are further allowed to be consecutive or inconsecutive. In addition, if a station is relatively close to the AP, there is no need to enhance receiving performance of the station through RU duplicate transmission. In this case, normal transmission rather than duplicate transmission may be used on an RU of the station. In the EHT MU PPDU in this application, both an RU that uses duplicate transmission and an RU that does not use duplicate transmission may be allocated, and a configuration manner is flexible. In addition, in step 701, the access point indicates, in the EHT MU PPDU, that the resource unit corresponding to the at least one station is used for duplicate transmission. In addition to an indication for RU duplicate transmission by using same station identifiers in the user fields, this application further provides another indication manner.

In an implementation, a user field of the EHT MU PPDU includes first information. The first information indicates that a resource unit corresponding to the user field is used for duplicate transmission.

Specifically, for RU duplicate transmission, the AP may indicate an RU or an MRU in the resource unit allocation subfield of the EHT MU PPDU, namely, an RU allocation subfield-1 and/or an RU allocation subfield-2. In addition, an indication is provided in the user field corresponding to the resource unit, to indicate whether a transmission mode of the resource unit is normal transmission performed by using the RU/MRU or duplicate transmission performed by using a plurality of RUs. In this case, the RUs that use duplicate transmission may be indicated as a combined RU that covers a plurality of duplication RUs. Specifically, the following Table 2 may be used as a preset rule.

**Table 2 Correspondence between a duplication RU and an indicated RU**

| RU for duplicate transmission | Quantity of duplicate transmissions | RU or MRU indicated in the resource unit allocation subfield |
|---|---|---|
| 26-tone RU | 2 | 52-tone RU |
| | 3 | 52+26-tone RU |
| | 4 | 106-tone RU |
| | 5 | 106+26-tone MRU |
| | 8 or 9 | 242-tone RU |
| | 16 or 18 | 484-tone RU |
| 52-tone RU | 2 | 106-tone RU |
| | 4 | 242-tone RU |
| | 8 | 484-tone RU |
| | 12 | 484+242-tone MRU |
| | 16 | 996-tone RU |
| 106-tone RU | 2 | 242-tone RU |
| | 4 | 484-tone RU |
| | 6 | 484+242-tone MRU |
| | 8 | 996-tone RU |
| | 12 | 996+484-tone MRU |
| | 16 | 2*996-tone |
| 242-tone RU | 2 | 484-tone RU |
| | 3 | 996+484-tone MRU |
| | 4 | 996-tone RU |
| | 6 | 996+484-tone MRU |
| | 8 | 2*996-tone RU |
| | 10 | 2*996+484-tone MRU |
| | 12 | 3*996-tone MRU |
| | 14 | 3*996+484-tone MRU |
| | 16 | 4*996-tone RU |
| 484-tone RU | 2 | 996-tone RU |
| | 3 | 996+484-tone MRU |
| | 4 | 2*996-tone RU |
| | 5 | 2*996+484-tone MRU |
| | 6 | 3*996-tone MRU |
| | 7 | 3*996+484-tone MRU |
| | 8 | 4*996-tone RU |
| 996-tone RU | 2 | 2*996-tone RU |
| | 3 | 3*996-tone MRU |
| | 4 | 4*996-tone RU |

The quantity of duplicate transmissions of the resource unit may be specified in advance. Alternatively, the AP may negotiate with the STA in advance to determine the quantity of duplicate transmissions of the resource unit before the AP sends the EHT MU PPDU. Alternatively, the quantity of duplicate transmissions may be flexibly indicated in a user field.

For example, a 996-tone RU is indicated in the resource unit allocation subfield. If a quantity of duplicate transmissions of the resource unit is 2, it indicates that duplicate transmission is performed on two 484-tone RUs; if a quantity of duplicate transmissions of the resource unit is 4, it indicates that duplicate transmission is performed on four 242-tone RUs; or if a quantity of duplicate transmissions of the resource unit is 8, it indicates that duplicate transmission is performed on eight 106-tone RUs.

In a specific implementation, for example, the preset quantity of duplicate transmissions is 2, and data or a data bit of a STA is indicated, in the EHT MU PPDU, to be duplicated and transmitted on a 996-tone RU. Specifically, one copy of the data or data bit of the STA is transmitted on one 484-tone RU, and another copy of the data or data bit of the STA is transmitted on another 484-tone RU. Alternatively, the data or data bit of the STA may be duplicated to obtain two copies that are allocated to data subcarriers of the 996-tone RU for transmission. For example, one copy of the data bit is transmitted on odd-numbered subcarriers included in the 996-tone RU, and the other copy of the data bit is transmitted on even-numbered subcarriers.

In the foregoing implementation of this application, the RUs that use duplicate transmission are indicated as one combined RU that covers a plurality of RUs, so that each station corresponds to only one user field. This reduces signaling overheads of the user fields in the EHT MU PPDU, and improves system efficiency. In addition, the quantity of duplicate transmissions may be accurately indicated according to a protocol, through pre-negotiation, or in a user field of the EHT MU PPDU, so that the receive end does not need to correctly read user fields of all station identifiers at the same time, and data transmission reliability is higher.

In an implementation, a value of an MCS field in a user field of the EHT MU PPDU is 14, to indicate that a resource unit is used for duplicate transmission; and another MCS is used for non-RU duplicate transmission.

In an implementation, a bit B 15 in a user field of the EHT MU PPDU may indicate that a corresponding resource unit is used for duplicate transmission. In other words, the first information may be carried in the bit B 15, namely, a reserved bit, in the user field of the EHT MU PPDU.

In another implementation, the user field in the EHT MU PPDU may further include second information. The second information indicates the quantity of duplicate transmissions of the resource unit corresponding to the user field.

Specifically, the MCS field (4 bits) of the user field in the EHT MU PPDU may be combined with a reserved bit (1 bit) to form an enhanced MCS. A value of the enhanced MCS is any one or more of 16 to 31, to indicate RU duplicate transmission. Different values of the enhanced MCS may indicate different quantities of duplication times. For example, if the value of the enhanced MCS is 16, it indicates that duplicate transmission is performed twice, and if the value of the enhanced MCS is 17, it indicates that duplicate transmission is performed for three times.

In addition, for RU duplicate transmission, a value of the NSS subfield is usually 1, to be specific, a number of spatial streams is 1. In this case, in an implementation, when a resource unit is used for duplicate transmission, the NSS subfield may be used as a reserved field and is not indicated. Alternatively, the NSS subfield may indicate a quantity of duplicate transmissions.

In an implementation, the first information and/or the second information may alternatively be carried in one or more of the following bits in the EHT MU PPDU: bits B20 to B25 of a 1^{st} symbol in the U-SIG, or a bit B2 or B8 of a 2^{nd} symbol in the U-SIG, or bits B13 to B16 of a 1^{st} symbol in the EHT-SIG.

It should be noted that the foregoing bit is a data bit, namely, a bit before encoding.

Specifically, reserved or unused bits or reserved or unused states (entries) of a (sub)field in the U-SIG and/or the EHT-SIG in the EHT MU PPDU are divided into two categories: disregard (Disregard) bits and validate (Validate) bits.

As specified in the 802.11be standard, if a station that implements an EHT basic feature finds that a validate bit in a PPDU is not set to a default (or default) value specified in the standard, or values of some subfields are set to a validate state, the station needs to defer for the duration of the PPDU, and transfers version-independent related information to a medium access control (Medium access Control, MAC) layer, to ensure coexistence and terminate reception of the PPDU. For a disregard bit or a subfield that is set to a disregard state, if an EHT station does not find that a validate bit in a PPDU is not set to a default (or default) value specified in the standard, or values of some subfields are set to a validate state, the station ignores the disregard bit or ignores the subfield that is set to the disregard state, and continues to read another field.

For example, a 1^{st} symbol of the U-SIG field includes five disregard bits and three validate bits, and a U-SIG overflow part of the EHT-SIG field includes four disregard bits. When any one of the validate bits is assigned with a new function in a subsequent standard, and the value is set to a non-default value 0, a current device (an old device that has been launched to the market) may defer for the duration of the PPDU (defer for the duration of the PPDU), and transfers version-independent related information to a MAC (Medium access Control, medium access control) layer, to ensure coexistence and terminate reception of the PPDU. However, when any disregard bit is assigned with a new function in the subsequent standard, regardless of a value that is set, if there is no non-default validate bit or validate state in the PPDU, the current device ignores the bit or the subfield, and continues to receive another field.

Corresponding bits are shown in Table 3 below.

**Table 3 Disregard and validate bits in the U-SIG and the EHT-SIG in the EHT MU PPDU**

| Bit | Field | Bit number |
|---|---|---|
| B20 to B24 (the 1^{st} symbol of the U-SIG) | Disregard (Disregard) bit | 5 |
| B25 (the 1^{st} symbol of the U-SIG) | Validate (Validate) bit | 1 |
| B2 (the 2^{nd} symbol of the U-SIG) | Validate (Validate) bit | 1 |
| B8 (the 2^{nd} symbol of the U-SIG) | Validate (Validate) bit | 1 |
| B13 to B16 (the 1^{st} symbol of the EHT-SIG) | Disregard (Disregard) bit | 4 |

Specifically, at least one bit in Table 3 may indicate a quantity of duplicate transmissions. The quantity 1 of duplicate transmissions may indicate that duplicate transmission is not used. Alternatively, one bit in Table 3 may indicate that RU duplicate transmission is used, and then at least one bit indicates a quantity of duplicate transmissions.

It should be noted that a quantity of duplicate transmissions is indicated in one EHT MU PPDU, to be specific, it indicates that quantities of duplicate transmissions corresponding to all stations that use duplicate transmission in the EHT MU PPDU are the same, and the EHT MU PPDU may further include a resource unit that does not use duplicate transmission. Alternatively, it may indicate that all stations may use a same quantity of RU duplicate transmissions.

In the foregoing implementation, RU duplicate transmission may be flexibly indicated in a common field in the EHT MU PPDU, and there is no need to make any change to the user specific field. This may effectively improve reliability of multi-user PPDU data transmission. The indication manner is flexible and diversified, and is easy to implement.

In another implementation, a specific index of the resource unit allocation subfield in the EHT MU PPDU may indicate that the resource unit is used for duplicate transmission.

Specifically, the RU allocation subfield-1 and the RU allocation subfield-2 indicate various different RU combinations by using a 9-bit index, and various different RU duplicate transmission combinations may be indicated by using some or all of indexes 304 to 511 (converted into decimal) of the resource unit allocation subfield.

For example, when the index of the resource unit allocation subfield is 305, it may indicate that the EHT MU PPDU includes 4*26-tone RU duplicate transmission, to be specific, a 26-tone RU is duplicated and transmitted four times, an empty 26-tone RU, and other 4*26-tone RU duplicate transmission. When the index of the resource unit allocation subfield is 312, it may indicate 4*242-tone RU duplicate transmission, to be specific, a 242-tone RU is duplicated and transmitted four times.

It should be noted that, in a 9-bit index of B8 to B0, bits B2 to B0 in descending order indicate 0 to 7. This indicates that one to eight user fields exist in a corresponding EHT-SIG content channel. Therefore, when an index is selected, B2 to B0 of the selected index need to correspond to a quantity of user fields existing in a subsequent corresponding content channel. For example, B2 to B0 of 305 are 1, and correspond to two user fields. This corresponds to a case in which there are two RUs used for duplicate transmission in an RU combination, and each RU corresponds to one user field. B2 to B0 of 312 are 0, and correspond to one user field. This corresponds to a case in which an RU combination includes one RU used for duplicate transmission, and the RU corresponds to one user field.

**Table 4 A specific index of the resource unit allocation subfield indicates RU duplicate transmission**

| Index of the resource unit allocation subfields B8 to B0 | Combination of RU duplicate transmission | | |
|---|---|---|---|
| 305 | 4*26-tone RU duplicate transmission | Empty | 4*26-tone RU duplicate transmission |
| ... | ... | | |
| 312 | 4*242-tone RU duplicate transmission | | |
| ... | ... | | |
| 320 | 4*484-tone RU duplicate transmission | | |
| ... | ... | | |

In the foregoing implementation, a specific index of the resource unit allocation subfield of the EHT MU PPDU may indicate RU duplicate transmission, and there is no need to modify the user specific field. This may effectively improve data transmission reliability of the EHT MU PPDU. The indication manner is flexible and diversified, and is easy to implement.

Based on the foregoing descriptions of the trigger frame and the EHT TB PPDU, in this application, a format of the trigger frame is improved in design, and a resource unit corresponding to the EHT TB PPDU sent by at least one station is indicated, in the trigger frame, to be used for duplicate transmission, to implement a multi-user duplicate transmission mode. This improves receiving performance of the receive end and data transmission reliability.

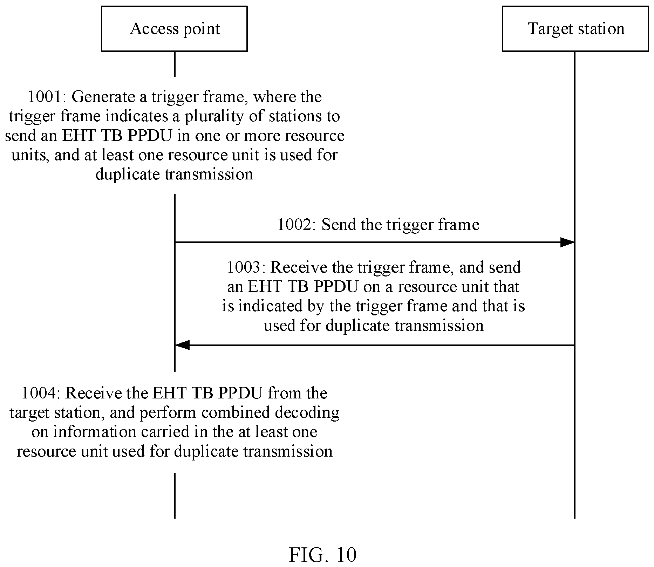

This application further provides a method for transmitting a trigger frame. As shown in FIG. 10, the method may include the following steps.

1001: An access point generates a trigger frame, where the trigger frame indicates a plurality of stations to send an EHT TB PPDU on one or more resource units, and at least one resource unit is used for duplicate transmission.

It can be learned, with reference to FIG. 3A and FIG. 3B, from the foregoing frame structure of the trigger frame that the trigger frame includes the common information field and the user information list field, and the user information list field includes a plurality of user information fields. One user information field includes an association identifier or a station identifier and a resource unit allocation subfield. The resource unit allocation subfield indicates a resource unit that is allocated to the station and that is used to send an EHT TB PPDU.

In an implementation, association identifiers or station identifiers corresponding to at least two of the user information fields included in the trigger frame are the same, to indicate that at least two resource units corresponding to the at least two user information fields are used for duplicate transmission.

That the plurality of resource units are used for duplicate transmission in this embodiment of this application means that a same data bit is transmitted on the plurality of resource units. To be specific, one data bit is duplicated and transmitted a plurality of times on data subcarriers included in the plurality of resource units.

Further, in an implementation, in the at least two user information fields used for duplicate transmission, a value of an MCS field in at least one user field may indicate that dual carrier modulation is used for a data bit carried in the corresponding resource units. For example, the value of the MCS field is 15, to indicate that dual carrier modulation is used for the at least two resource units.

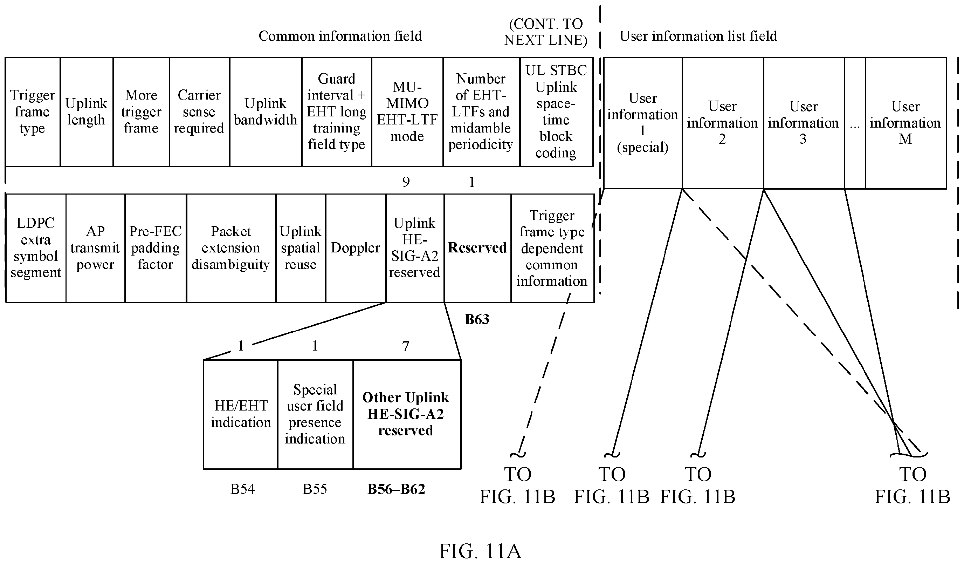

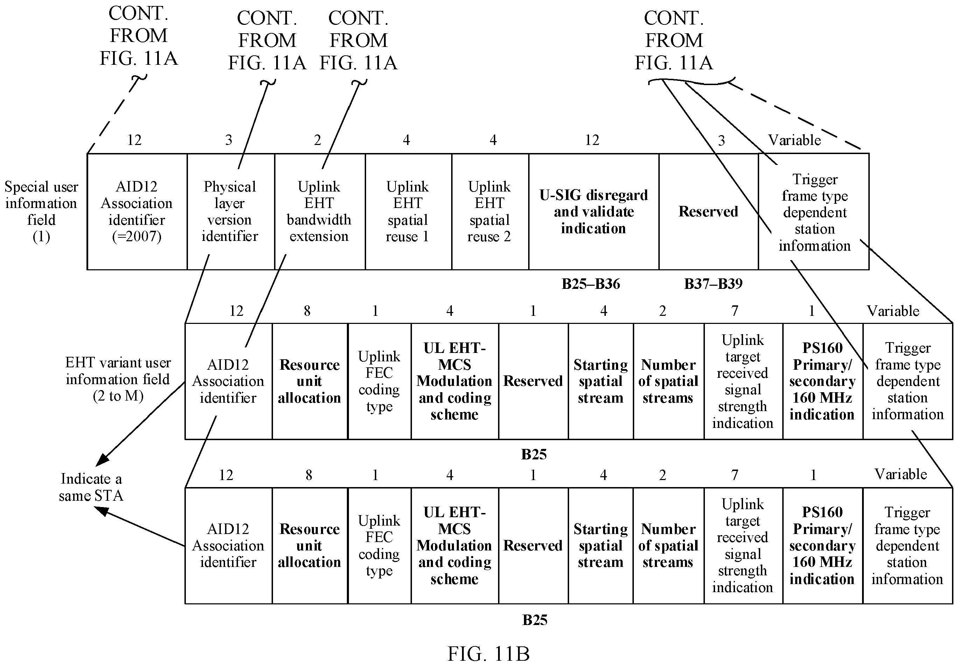

For example, with reference to FIG. 11A and FIG. 11B, if a station identifier in a user information 2 field is ID2, and a station identifier in a user information 3 field is also ID2, it indicates that two resource units corresponding to the user information 2 field and the user information 3 field are allocated to a same station, to duplicate and transmit data or a data bit of the station. Moreover, if a value of an MCS field in either of the user information 2 field and the user information 3 field is 15, it indicates that dual carrier modulation is used for the two resource units indicated by the station ID 2 in the user information 2 field and the user information 3 field.

1002: The access point sends the trigger frame.

The access point sends the trigger frame to one or more stations.

1003: A target station receives the trigger frame, and sends an EHT TB PPDU on a resource unit that is indicated by the trigger frame and that is used for duplicate transmission.

After receiving the trigger frame, the target station determines, based on resource unit allocation that is indicated by the trigger frame and that is of the target station, that the resource unit allocated by the AP to the target station is a resource unit used for duplicate transmission. The target station may duplicate and transmit the EHT TB PPDU on the allocated resource unit.

Based on the indication manner of RU duplicate transmission in 1001, after receiving the trigger frame, the target station queries that the association identifiers or the station identifiers in the at least two user information fields in the trigger frame are an identifier of the target station, and the resource units in the at least two user information fields are used by the target station to duplicate and transmit the EHT TB PPDU.

In addition, when the target station sends the EHT TB PPDU, if an RU in the EHT TB PPDU uses an RU duplicate transmission mode, data (or all) subcarriers may be used for duplicate transmission, and dual carrier modulation is used. In addition, in duplicate transmission, different RUs may further use one or more of the following methods: different interleavers, different encode puncture modes, or different subcarrier mapping adjustment orders, to increase diversity, improve data transmission reliability, and reduce a PAPR.

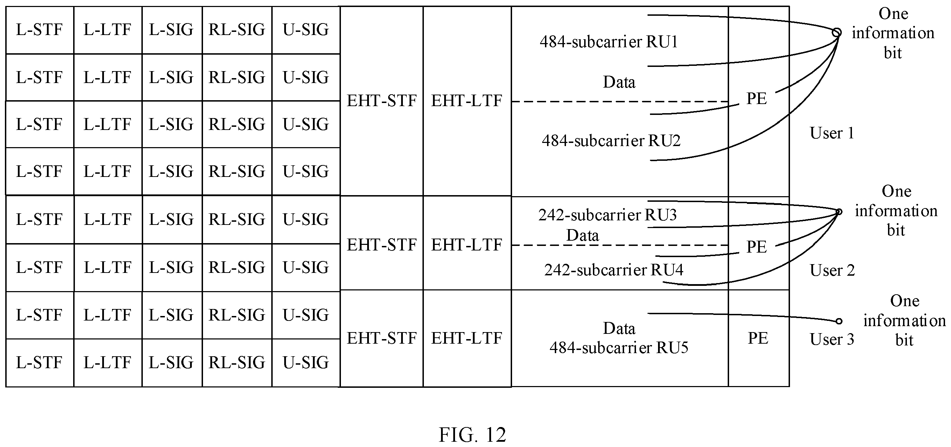

For example, a schematic diagram of duplicate transmission the EHT TB PPDU is shown in FIG. 12, and a transmission bandwidth of the EHT TB PPDU is 160 MHz. The AP may divide the entire bandwidth into a 484-subcarrier RU1, a 484-subcarrier RU2, a 242-subcarrier RU3, a 242-subcarrier RU4, and a 484-subcarrier RU5. It is indicated in the EHT TB PPDU that: RU duplicate transmission is used, by a user 1, on the first two RUs, namely, the 484-subcarrier RU1 and the 484-subcarrier RU2, and dual carrier modulation is used; RU duplicate transmission is used, by a user 2, on the 242-subcarrier RU3 and the 242-subcarrier RU4, and dual carrier modulation is used; and common transmission, namely, non-duplicate transmission, is performed, by a user 3, on the 484-subcarrier RU5.

1004: The access point receives the EHT TB PPDU from the target station, and performs combined decoding on information carried in the at least one resource unit used for duplicate transmission. After receiving the EHT TB PPDU from the target station, the access point may perform combined decoding, in the EHT TB PPDU, on the information carried in the resource unit used for duplicate transmission. This improves data receiving reliability of the access point, and improves transmission performance.

Correspondingly, after the access point receives the EHT TB PPDU, if an RU in the EHT TB PPDU uses the RU duplicate transmission mode, the access point may perform combined decoding on subcarriers that carry a same data bit and that are included in different RUs, to improve data receiving reliability. Correspondingly, one or more of the following operations: different deinterleavers, decode puncture modes, and different subcarrier demapping orders may be used for different RUs.

In addition, in step 1001, it is indicated, in the trigger frame, that the resource unit corresponding to the at least one station is used for duplicate transmission. In addition to an indication for RU duplicate transmission by using the same station identifiers or association identifiers in the user information fields, this application further provides another indication manner.

In an implementation, a value of an MCS field in a user information field in the trigger frame may indicate that a corresponding resource unit is used for duplicate transmission. For example, the value of the MCS field is 14, to indicate that the resource unit corresponding to the user information field is used for duplicate transmission, and another value of the MCS field indicates non-RU duplicate transmission.

Specifically, an indication may be provided in the user information field, to indicate whether a transmission mode of the resource unit is normal transmission performed by using the RU/MRU or duplicate transmission performed by using a plurality of RUs. In this case, refer to the foregoing Table 2. The RUs that use duplicate transmission are indicated as one combined RU that covers a plurality of duplication RUs.

In an implementation, a user information field included in the trigger frame may include first information. The first information indicates that a resource unit corresponding to the user information field is used for duplicate transmission.

Specifically, a bit B25 in the user information field in the trigger frame may indicate that the corresponding resource unit is used for duplicate transmission. In other words, as shown in FIG. 11A and FIG. 11B, the first information may be carried in the bit B25, namely, a reserved bit, in the user information field in the trigger frame.

Alternatively, the MCS field (4 bits) of the user field is combined with a reserved bit (1 bit) to form an enhanced MCS. A value of the enhanced MCS is any one or more of 16 to 31, to indicate RU duplicate transmission. Different values of the enhanced MCS may indicate different quantities of duplication times. For example, if the value of the enhanced MCS is 16, it indicates that duplicate transmission is performed twice, and if the value of the enhanced MCS is 17, it indicates that duplicate transmission is performed for three times.

The quantity of duplicate transmissions of the resource unit may be specified in advance. Alternatively, the AP may negotiate with the STA in advance to determine the quantity of duplicate transmissions of the resource unit before the AP sends the trigger frame. Alternatively, the quantity of duplicate transmissions may be flexibly indicated in a user information field.

In the foregoing implementation of this application, the RUs that use duplicate transmission are indicated as one combined RU that covers a plurality of duplication RUs, so that each station corresponds to only one user field. This reduces signaling overheads of the user information fields in the trigger frame, and improves system efficiency. In addition, the quantity of duplicate transmissions may be accurately indicated according to a protocol, through pre-negotiation, or in a user field of the trigger frame, so that a receive end does not need to correctly read user information fields of all station identifiers at the same time, and data transmission reliability is higher.

In an implementation, the user information field included in the trigger frame further includes second information. The second information indicates the quantity of duplicate transmissions of the resource unit corresponding to the user information field.

Specifically, the second information may be carried in a starting spatial stream in the user information field. Alternatively, the second information may be carried in some or all bits of a number of spatial streams NSS in the user information field. Alternatively, the second information may be carried in some or all bits of a starting spatial stream and an NSS in the user information field.

In addition, the first information and/or the second information may be further carried in a reserved bit in the trigger frame, for example, indicated by using one or more of the following bits: bits B25 to B39 in a special user information list field, or bits B56 to B63 in a common information field. With reference to FIG. 11A and FIG. 11B, B25 to B36 are disregard and validate bits in the special user information list field, and B37 to B39 are reserved bits of a reserved field in the special user information list field; and B56 to B62 are the last seven bits of an uplink HE-SIG-A2 reserved field in the common information field, and B63 is a reserved bit of a reserved field in the common information field.

Specifically, at least one of the foregoing bits may indicate a quantity of duplicate transmissions. The quantity 1 of duplicate transmissions may indicate that duplicate transmission is not used. Alternatively, one of the foregoing bits may indicate that RU duplicate transmission is used, and then at least one bit indicates a quantity of duplicate transmissions.

In addition, in an implementation, a resource unit allocation field or a PS 160 MHz primary/secondary indication field or both in a user information field in the trigger frame indicate that a resource unit corresponding to the user information field is used for duplicate transmission. In other words, joint indication may be performed by using an index corresponding to the resource unit allocation subfield of the user information field in the trigger frame, or an index corresponding to the PS160 MHz primary/secondary indication field, or a combination of the resource unit allocation subfield and the PS 160 MHz primary/secondary indication field. A reserved entry in a resource unit allocation table index indicates that a specific resource unit is used for duplicate transmission.

In the foregoing implementation, RU duplicate transmission may be flexibly indicated in the common information field of the trigger frame, or RU duplicate transmission may be flexibly indicated in the user information field of the trigger frame. This can effectively improve reliability of multi-user EHT T PPDU data transmission. The indication manner is flexible and diversified, and is easy to implement.

Resource unit allocation in the trigger frame is indicated in the user information field. For example, RU duplicate transmission is indicated in the common information field of the trigger frame, so that RU duplicate transmission of a plurality of stations may be indicated in the trigger frame. To be specific, quantities of duplicate transmissions corresponding to all stations that use duplicate transmission are the same. For example, if RU duplicate transmission is indicated in the user information field of the trigger frame, a separate duplicate transmission indication may be implemented for each station, for example, an indication of whether to perform duplicate transmission and an indication of a quantity of duplicate transmissions are included.

It may be understood that a same step or a step or a message having a same function in embodiments of this application may be mutually referenced in different embodiments.

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments, the methods and/or steps implemented by the access point may also be implemented by a component (for example, a chip or a circuit) that can be used for the access point; and the methods and/or the steps implemented by the target station may also be implemented by a component (for example, a chip or a circuit) that can be used for the target station.

The foregoing mainly describes, from a perspective of interaction between devices, the solutions provided in this application. Correspondingly, this application further provides a communication apparatus, and the communication apparatus is configured to implement the foregoing methods. The communication apparatus may be the access point in the foregoing method embodiments, an apparatus including the foregoing access point, or a component that can be used for the access point. Alternatively, the communication apparatus may be the target station in the foregoing method embodiments, an apparatus including the foregoing target station, or a component that can be used for the target station.

It may be understood that, to implement the foregoing functions, the communication apparatus includes a corresponding hardware structure and/or software module for performing each function. A person skilled in the art should easily be aware that, with reference to units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

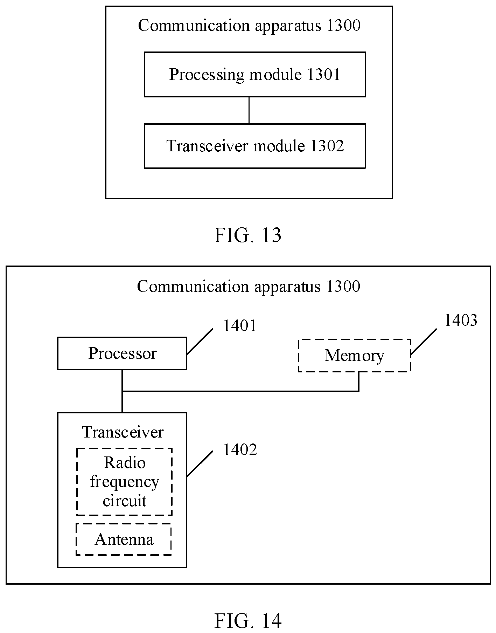

In an implementation scenario, that the communication apparatus is the access point in the foregoing method embodiment is used as an example. FIG. 13 is a schematic diagram of a structure of a communication apparatus 1300. The access point 13 includes a processing module 1301 and a transceiver module 1302.

The processing module 1301 is configured to generate an extremely high throughput multiple user physical layer protocol data unit EHT MU PPDU. The EHT MU PPDU includes a resource unit allocation subfield, indicating resource unit allocation of a plurality of stations, and a resource unit corresponding to at least one of the plurality of stations is used for duplicate transmission.

The transceiver module 1302 is configured to send the EHT MU PPDU.

In an implementation, a user specific field included in the EHT MU PPDU includes a plurality of user fields. One user field includes one station identifier and corresponds to one resource unit. Station identifiers in at least two user fields are the same, to indicate that at least two resource units corresponding to the at least two user fields are used for duplicate transmission.

In an implementation, the at least two resource units are consecutive or inconsecutive.

In an implementation, a value of a modulation and coding scheme MCS field of at least one user field of the at least two user fields that are included in the EHT MU PPDU and that correspond to the at least two resource units is 15, to indicate that dual carrier modulation is used for the at least two resource units.

In an implementation, a user field of the EHT MU PPDU includes first information. The first information indicates that a resource unit corresponding to the user field is used for duplicate transmission.

In an implementation, a quantity of duplicate transmissions of the resource unit is pre-specified, or is pre-determined through negotiation with a station before the EHT MU PPDU is sent.

In an implementation, the first information is carried in a bit B15 in the user field of the EHT MU PPDU, or a value of an MCS field in the user field of the EHT MU PPDU is 14, or the value of the MCS field is any one of 16 to 31, to indicate that the resource unit is used for duplicate transmission.

In an implementation, different MCS values indicate different quantities of duplications of the resource unit used for duplicate transmission.

In an implementation, the user field in the EHT MU PPDU further includes second information. The second information indicates the quantity of duplicate transmissions of the resource unit corresponding to the user field.

In an implementation, the first information or the second information or both are carried in one or more of the following bits in the EHT MU PPDU: bits B20 to B25 of a 1^{st} symbol in a universal signal field U-SIG, or a bit B2 or B8 of a 2^{nd} symbol in the U-SIG, or bits B13 to B16 of a 1^{st} symbol in an extremely high throughput signal field EHT-SIG.

In an implementation, the resource unit allocation subfield indicates that the resource unit is used for duplicate transmission.

All related content of the steps in the foregoing method embodiment may be cited in function descriptions of corresponding functional modules. Details are not described herein again.

In this application, the access point is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

In some embodiments, in terms of hardware implementation, a person skilled in the art may figure out that the access point may use a form of the communication apparatus 600 shown in FIG. 6.

In an example, a function/an implementation process of the processing module 1301 in FIG. 13 may be implemented by invoking, by the processor 601 in the communication apparatus 600 shown in FIG. 6, the computer-executable instructions stored in the memory 604, and a function/an implementation process of the transceiver module 1302 in FIG. 13 may be implemented by using the transceiver 602 in the communication apparatus 600 shown in FIG. 6.

In some embodiments, when the communication apparatus 1300 in FIG. 13 is a chip or a chip system, a function/an implementation process of the processing module 1301 may be implemented by using an input/output interface (or a communication interface) of the chip or the chip system, and a function/an implementation process of the transceiver module 1302 may be implemented by using a processor (or a processing circuit) of the chip or the chip system.

The access point provided in this embodiment can perform the foregoing service transmission method. Therefore, for technical effects that can be achieved by the access point, refer to the foregoing method embodiment. Details are not described herein again.

In an implementation scenario, as shown in FIG. 13, that the communication apparatus 1300 is the target station in the foregoing method embodiment is used as an example. The communication apparatus 1300 includes a processing module 1301 and a transceiver module 1302.

The transceiver module 1302 is configured to receive an EHT MU PPDU. The EHT MU PPDU includes a resource unit allocation subfield, indicating resource unit allocation of a plurality of stations, and a resource unit corresponding to at least one of the plurality of stations is used for duplicate transmission.

The processing module 1301 is configured to: determine, based on the EHT MU PPDU, that a plurality of resource units corresponding to the target station are used for duplicate transmission, and perform combined decoding on information carried in the plurality of resource units.

In an implementation, a user specific field included in the EHT MU PPDU includes a plurality of user fields. One user field includes one station identifier and corresponds to one resource unit. Station identifiers in at least two user fields are the same, to indicate that at least two resource units corresponding to the at least two user fields are used for duplicate transmission.

In an implementation, the at least two resource units are consecutive or inconsecutive.

In an implementation, a value of a modulation and coding scheme MCS field of at least one user field of the at least two user fields that are included in the EHT MU PPDU and that correspond to the at least two resource units is 15, to indicate that dual carrier modulation is used for the at least two resource units.

In an implementation, a user field that is in the EHT MU PPDU and that corresponds to the target station includes first information. The first information indicates that a resource unit corresponding to the user field is used for duplicate transmission.

In an implementation, a quantity of duplicate transmissions of the resource unit is pre-specified, or is pre-determined through negotiation with a station before the EHT MU PPDU is sent.

In an implementation, the first information is carried in a bit B15 in the user field that is in the EHT MU PPDU and that corresponds to the target station, or a value of an MCS field in the user field that is in the EHT MU PPDU and that corresponds to the target station is 14, or the value of the MCS field is any one of 16 to 31, to indicate that the resource unit is used for duplicate transmission.

In an implementation, different MCS values indicate different quantities of duplications of the resource unit used for duplicate transmission.

In an implementation, the user field in the EHT MU PPDU further includes second information. The second information indicates the quantity of duplicate transmissions of the resource unit corresponding to the user field.

In an implementation, the first information or the second information or both are carried in one or more of the following bits in the EHT MU PPDU: bits B20 to B25 of a 1^{st} symbol in a universal signal field U-SIG, or a bit B2 or B8 of a 2^{nd} symbol in the U-SIG, or bits B13 to B16 of a 1^{st} symbol in an extremely high throughput signal field EHT-SIG.

In an implementation, the resource unit allocation subfield indicates that the resource unit is used for duplicate transmission.

In another implementation scenario, as shown in FIG. 13, that the communication apparatus 1300 is the access point in the foregoing method embodiment is used as an example. The communication apparatus 1300 includes a processing module 1301 and a transceiver module 1302.

The processing module 1301 is configured to generate a trigger frame. The trigger frame indicates a plurality of stations to send an extremely high throughput trigger based physical layer protocol data unit EHT TB PPDU on one or more resource units, and at least one resource unit is used for duplicate transmission.

The transceiver module 1302 is configured to send the trigger frame.

In an implementation, the transceiver module 1302 is further configured to receive an EHT TB PPDU from a station; and the processing module 1301 is further configured to perform combined decoding on information carried in the at least one resource unit used for duplicate transmission. In an implementation, association identifiers or station identifiers corresponding to at least two of user information fields included in the trigger frame are the same, to indicate that at least two resource units corresponding to the at least two user information fields are used for duplicate transmission.

In an implementation, a value of a modulation and coding scheme MCS field of at least one user field of the at least two user information fields is 15, to indicate that dual carrier modulation is used for the at least two resource units.

In an implementation, a user information field included in the trigger frame includes first information. The first information indicates that a resource unit corresponding to the user information field is used for duplicate transmission.

In an implementation, the first information is carried in a bit B25 in the user information field, or a value of an MCS field in the user information field is 14, or the value of the MCS field is any one of 16 to 31, to indicate that the resource unit corresponding to the user information field is used for duplicate transmission.

In an implementation, different MCS values indicate different quantities of duplications of the resource unit used for duplicate transmission.

In an implementation, a quantity of duplicate transmissions of the resource unit is pre-specified, or is pre-determined through negotiation with a station before the trigger frame is sent.

In an implementation, the user information field included in the trigger frame further includes second information. The second information indicates the quantity of duplicate transmissions of the resource unit corresponding to the user information field.

In an implementation, the second information is carried in some or all bits of a starting spatial stream and/or a number of spatial streams NSS in the user information field.

In an implementation, the first information or the second information or both are carried in one or more of the following bits in the trigger frame: bits B25 to B39 in a special user information list field, or bits B56 to B63 in a common information field.

In an implementation, a resource unit allocation field or a PS160 MHz primary/secondary indication field or both in a user information field in the trigger frame indicate that a resource unit corresponding to the user information field is used for duplicate transmission.

In an implementation scenario, as shown in FIG. 13, that the communication apparatus 1300 is the target station in the foregoing method embodiment is used as an example. The communication apparatus 1300 includes a processing module 1301 and a transceiver module 1302.

The transceiver module 1302 is configured to receive a trigger frame. The trigger frame indicates a plurality of stations to send an extremely high throughput trigger based physical layer protocol data unit EHT TB PPDU on one or more resource units, and at least one resource unit is used for duplicate transmission.

The processing module 1301 is configured to determine, based on the trigger frame, that a resource unit that corresponds to the target station and that is used to send an EHT TB PPDU is used for duplicate transmission.

In an implementation, the transceiver module 1302 is further configured to send the EHT TB PPDU to an access point on the resource unit used for duplicate transmission.

In an implementation, association identifiers or station identifiers corresponding to at least two of user information fields included in the trigger frame are the same as a station identifier corresponding to the target station, to indicate that at least two resource units corresponding to the at least two user information fields are used for duplicate transmission.

In an implementation, a value of a modulation and coding scheme MCS field of at least one user field of the at least two user information fields that are included in the trigger frame and that correspond to the at least two resource units is 15, to indicate that dual carrier modulation is used for the at least two resource units.

In an implementation, a user information field included in the trigger frame includes first information. The first information indicates that a resource unit corresponding to the user information field is used for duplicate transmission.

In an implementation, the first information is carried in a bit B25 in the user information field, or a value of an MCS field in the user information field is 14, or the value of the MCS field is any one of 16 to 31, to indicate that the resource unit corresponding to the user information field is used for duplicate transmission.

In an implementation, different MCS values indicate different quantities of duplications of the resource unit used for duplicate transmission.

In an implementation, a quantity of duplicate transmissions of the resource unit is pre-specified, or is pre-determined through negotiation with a station before the trigger frame is sent.

In an implementation, the user information field included in the trigger frame further includes second information. The second information indicates the quantity of duplicate transmissions of the resource unit corresponding to the user information field.

In an implementation, the second information is carried in some or all bits of a starting spatial stream and/or a number of spatial streams NSS in the user information field.

In an implementation, the first information or the second information or both are carried in one or more of the following bits in the trigger frame: bits B25 to B39 in a special user information list field, or bits B56 to B63 in a common information field.

In an implementation, a resource unit allocation field or a PS 160 MHz primary/secondary indication field or both in a user information field in the trigger frame indicate that a resource unit corresponding to the user information field is used for duplicate transmission. All related content of the steps in the foregoing method embodiment may be cited in function descriptions of corresponding functional modules. Details are not described herein again.

In this application, the target station is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

The communication apparatus 1300 provided in this embodiment of this application may be an independent device or may be a part of a large device. For example, the communication apparatus 1300 may be implemented in the following form:
(1) an independent integrated circuit IC, a chip, a chip system, or a subsystem;
(2) a set including one or more ICs, where optionally, the set of ICs may also include a storage component configured to store data and instructions;
(3) an ASIC, for example, a modem (Modem);
(4) a module that can be built in another device;
(5) a receiver, an intelligent terminal, a wireless device, a handheld device, a mobile unit, a vehicle-mounted device, a cloud device, an artificial intelligence device, or the like; or
(6) others.

In some embodiments, in terms of hardware implementation, a person skilled in the art may figure out that the target station may use a form of the communication apparatus 600 shown in FIG. 6. The target station provided in this embodiment can perform the foregoing method. Therefore, for technical effects that can be achieved by the target station, refer to the foregoing method embodiment. Details are not described herein again.

As a possible product form, the access point and the target station in embodiments of this application may alternatively be implemented by using one or more field programmable gate arrays (field programmable gate array, FPGA), a programmable logic device (programmable logic device, PLD), a controller, a state machine, gate logic, a discrete hardware component, any other proper circuits, or any combination of circuits that can perform the various functions described in this application.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store necessary program instructions and data. The processor may invoke program code stored in the memory, to indicate the communication apparatus to perform the method in any one of the foregoing method embodiments. Certainly, the communication apparatus may not include the memory.

In another possible implementation, the communication apparatus further includes an interface circuit. The interface circuit is a code/data read/write interface circuit. The interface circuit is configured to: receive computer-executable instructions (the computer-executable instructions are stored in a memory, and may be directly read from the memory, or may be read by using another component), and transmit the computer-executable instructions to the processor.

In still another possible implementation, the communication apparatus further includes a communication interface. The communication interface is configured to communicate with a module outside the communication apparatus.

It may be understood that the communication apparatus may be a chip or a chip system. When the communication apparatus is a chip system, the communication apparatus may include a chip, or may include a chip and another discrete device. This is not specifically limited in this embodiment of this application.

In some embodiments, an embodiment of this application further provides a communication apparatus (for example, the communication apparatus may be a chip or a chip system). The communication apparatus includes an interface circuit and a logic circuit. The interface circuit is configured to obtain input information and/or output information. The logic circuit is configured to perform the method in any one of the foregoing method embodiments, to perform processing and/or generate output information based on the input information.

As a possible product form, the access point and the target station in embodiments of this application may be implemented by using general bus architectures.

For ease of description, FIG. 14 is a schematic diagram of a structure of a communication apparatus 1400 according to an embodiment of this application. The communication apparatus 1400 includes a processor 1401 and a transceiver 1402. The communication apparatus 1400 may be an access point, a target station, or a chip in the access point or the target station. FIG. 14 shows only main components of the communication apparatus 1400. In addition to the processor 1401 and the transceiver 1402, the communication apparatus may further include a memory 1403 and an input/output apparatus (not shown in the figure).

The processor 1401 is mainly configured to: process a communication protocol and communication data, control the entire communication apparatus, execute a software program, and process data of the software program. The memory 1403 is mainly configured to store a software program and data. The transceiver 1402 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

The processor 1401, the transceiver 1402, and the memory 1403 may be connected through a communication bus.

After the communication apparatus is powered on, the processor 1401 may read the software program in the memory 1403, interpret and execute instructions of the software program, and process data of the software program. When data needs to be sent wirelessly, the processor 1401 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave by using the antenna. When data is sent to the communication apparatus, the radio frequency circuit receives a radio frequency signal by using the antenna, converts the radio frequency signal into a baseband signal, and outputs the baseband signal to the processor 1401. The processor 1401 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A sequence of the steps of the method in embodiments of this application may be adjusted, or the steps may be combined or removed based on an actual requirement.

The modules in the apparatus in embodiments of this application may be combined, divided, or removed based on an actual requirement.

It should be understood that, unless otherwise specified, for same or similar parts in embodiments of this application, refer to each other. In embodiments of this application and the implementations/implementation methods in embodiments, unless otherwise specified or there is a logic conflict, terms and/or descriptions are consistent and may be mutually referenced between different embodiments and between the implementations/implementation methods in embodiments. Technical features in different embodiments and the implementations/implementation methods in embodiments may be combined based on an internal logical relationship thereof, to form a new embodiment, implementation, or implementation method. The foregoing implementations of this application are not intended to limit the protection scope of this application.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with another feature based on a requirement. Correspondingly, the apparatus provided in embodiments of this application may also implement these features or functions. Details are not described herein.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium accessible by a computer, or include one or more data storage devices such as a server and a data center that can be integrated with a medium. The available medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the apparatus described above.

Although this application is described herein with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce good effect.

Although this application is described with reference to specific features and embodiments thereof, it is clear that various modifications and combinations may be made to this application without departing from the spirit and scope of this application. Correspondingly, this specification and accompanying drawings are merely example description of this application defined by the appended claims, and are considered as any of or all modifications, variations, combinations, or equivalents that cover the scope of this application. It is clear that a person skilled in the art can make various modifications and variations to this application without departing from the spirit and scope of this application. In this way, this application is also intended to cover these modifications and variations of this application provided that these modifications and variations fall within the scope of the claims of this application and equivalent technologies thereof.

## Claims

1. A method for transmitting a physical layer protocol data unit, applied to an access point, wherein the method comprises:
generating an extremely high throughput multiple user physical layer protocol data unit EHT MU PPDU, wherein the EHT MU PPDU comprises a resource unit allocation subfield, indicating resource unit allocation of a plurality of stations, and a resource unit corresponding to at least one of the plurality of stations is used for duplicate transmission; and
sending the EHT MU PPDU.

2. The method according to claim 1, wherein a user specific field comprised in the EHT MU PPDU comprises a plurality of user fields, one user field comprises one station identifier and corresponds to one resource unit, and station identifiers in at least two user fields are the same, to indicate that at least two resource units corresponding to the at least two user fields are used for duplicate transmission.

3. The method according to claim 2, wherein the at least two resource units are consecutive or inconsecutive.

4. The method according to claim 2 or 3, wherein a value of a modulation and coding scheme MCS field of at least one user field of the at least two user fields that are comprised in the EHT MU PPDU and that correspond to the at least two resource units is 15, to indicate that dual carrier modulation is used for the at least two resource units.

5. The method according to claim 1, wherein a user field of the EHT MU PPDU comprises first information, and the first information indicates that a resource unit corresponding to the user field is used for duplicate transmission.

6. The method according to claim 5, wherein a quantity of duplicate transmissions of the resource unit is pre-specified, or is pre-determined through negotiation with a station before the EHT MU PPDU is sent.

7. The method according to claim 5 or 6, wherein the first information is carried in a bit B 15 in the user field of the EHT MU PPDU, or a value of an MCS field in the user field of the EHT MU PPDU is 14, or the value of the MCS field is any one of 16 to 31, to indicate that the resource unit is used for duplicate transmission.

8. The method according to claim 5 or 7, wherein the user field in the EHT MU PPDU further comprises second information, and the second information indicates the quantity of duplicate transmissions of the resource unit corresponding to the user field.

9. The method according to any one of claims 5 to 8, wherein the first information or the second information or both are carried in one or more of the following bits in the EHT MU PPDU:
data bits B20 to B25 of a 1^{st} symbol in a universal signal field U-SIG, or
a data bit B2 or B8 of a 2^{nd} symbol in the U-SIG, or
data bits B 13 to B16 of a 1^{st} symbol in an extremely high throughput signal field EHT-SIG.

10. The method according to claim 1, wherein the resource unit allocation subfield indicates that the resource unit is used for duplicate transmission.

11. A method for transmitting a physical layer protocol data unit, applied to a target station, wherein the method comprises:
receiving an EHT MU PPDU, wherein the EHT MU PPDU comprises a resource unit allocation subfield, indicating resource unit allocation of a plurality of stations, and a resource unit corresponding to at least one of the plurality of stations is used for duplicate transmission; and
determining, based on the EHT MU PPDU, that a plurality of resource units corresponding to the target station are used for duplicate transmission, and performing combined decoding on information carried in the plurality of resource units.

12. The method according to claim 11, wherein a user specific field comprised in the EHT MU PPDU comprises a plurality of user fields, one user field comprises one station identifier and corresponds to one resource unit, and station identifiers in at least two user fields are the same, to indicate that at least two resource units corresponding to the at least two user fields are used for duplicate transmission.

13. The method according to claim 12, wherein a value of a modulation and coding scheme MCS field of at least one user field of the at least two user fields that are comprised in the EHT MU PPDU and that correspond to the at least two resource units is 15, to indicate that dual carrier modulation is used for the at least two resource units.

14. The method according to claim 11, wherein a user field that is in the EHT MU PPDU and that corresponds to the target station comprises first information, and the first information indicates that a resource unit corresponding to the user field is used for duplicate transmission.

15. The method according to claim 14, wherein the first information is carried in a bit B15 in the user field that is in the EHT MU PPDU and that corresponds to the target station, or a value of an MCS field in the user field that is in the EHT MU PPDU and that corresponds to the target station is 14, to indicate that the resource unit is used for duplicate transmission.

16. The method according to claim 14 or 15, wherein the user field in the EHT MU PPDU further comprises second information, and the second information indicates a quantity of duplicate transmissions of the resource unit corresponding to the user field.

17. The method according to any one of claims 14 to 16, wherein the first information or the second information or both are carried in one or more of the following bits in the EHT MU PPDU:
bits B20 to B25 of a 1^{st} symbol in a universal signal field U-SIG, or
a bit B2 or B8 of a 2^{nd} symbol in the U-SIG, or
bits B13 to B 16 of a 1^{st} symbol in an extremely high throughput signal field EHT-SIG.

18. A method for transmitting a trigger frame, applied to an access point, wherein the method comprises:
generating a trigger frame, wherein the trigger frame indicates a plurality of stations to send an extremely high throughput trigger based physical layer protocol data unit EHT TB PPDU on one or more resource units, and at least one resource unit is used for duplicate transmission; and
sending the trigger frame.

19. The method according to claim 18, wherein the method further comprises:
receiving an EHT TB PPDU from a station; and
performing combined decoding on information carried in the at least one resource unit used for duplicate transmission.

20. The method according to claim 18 or 19, wherein association identifiers or station identifiers corresponding to at least two of user information fields comprised in the trigger frame are the same, to indicate that at least two resource units corresponding to the at least two user information fields are used for duplicate transmission.

21. The method according to claim 20, wherein a user information field comprised in the trigger frame comprises first information, and the first information indicates that a resource unit corresponding to the user information field is used for duplicate transmission.

22. The method according to claim 21, wherein the first information is carried in a bit B25 in the user information field, or a value of an MCS field in the user information field is 14, or the value of the MCS field is any one of 16 to 31, to indicate that the resource unit corresponding to the user information field is used for duplicate transmission.

23. The method according to claim 21 or 22, wherein the user information field comprised in the trigger frame further comprises second information, and the second information indicates a quantity of duplicate transmissions of the resource unit corresponding to the user information field.

24. A method for transmitting a trigger frame, applied to a target station, wherein the method comprises:
receiving a trigger frame, wherein the trigger frame indicates a plurality of stations to send an extremely high throughput trigger based physical layer protocol data unit EHT TB PPDU on one or more resource units, and at least one resource unit is used for duplicate transmission; and
determining, based on the trigger frame, that a resource unit that corresponds to the target station and that is used to send an EHT TB PPDU is used for duplicate transmission.

25. The method according to claim 24, wherein the method further comprises:
sending, on the resource unit used for duplicate transmission, the EHT TB PPDU to an access point.

26. The method according to claim 24 or 25, wherein association identifiers or station identifiers corresponding to at least two of user information fields comprised in the trigger frame are the same as a station identifier corresponding to the target station, to indicate that at least two resource units corresponding to the at least two user information fields are used for duplicate transmission.

27. The method according to claim 26, wherein a value of a modulation and coding scheme MCS field of at least one user field of the at least two user information fields that are comprised in the trigger frame and that correspond to the at least two resource units is 15, to indicate that dual carrier modulation is used for the at least two resource units.

28. The method according to claim 24 or 25, wherein a user information field comprised in the trigger frame comprises first information, and the first information indicates that a resource unit corresponding to the user information field is used for duplicate transmission.

29. The method according to claim 28, wherein the first information is carried in a bit B25 in the user information field, or a value of an MCS field in the user information field is 14, or the value of the MCS field is any one of 16 to 31, to indicate that the resource unit corresponding to the user information field is used for duplicate transmission.

30. The method according to claim 28 or 29, wherein a quantity of duplicate transmissions of the resource unit is pre-specified, or is pre-determined through negotiation with a station before the trigger frame is sent.

31. The method according to claim 28 or 29, wherein the user information field comprised in the trigger frame further comprises second information, and the second information indicates the quantity of duplicate transmissions of the resource unit corresponding to the user information field.

32. The method according to claim 32, wherein the second information is carried in some or all bits of a starting spatial stream and/or a number of spatial streams NSS in the user information field.

33. The method according to any one of claims 28 to 32, wherein the first information or the second information or both are carried in one or more of the following bits in the trigger frame:
bits B25 to B39 in a special user information list field, or bits B56 to B63 in a common information field.

34. The method according to claim 24 or 25, wherein a resource unit allocation field or a PS160 MHz primary/secondary indication field or both in a user information field in the trigger frame indicate that a resource unit corresponding to the user information field is used for duplicate transmission.

35. A communication apparatus, wherein the communication apparatus comprises a processor and a communication interface, wherein
the communication interface is configured to communicate with a module outside the communication apparatus, and the processor is configured to run a computer program or instructions, to implement the method according to any one of claims 1 to 10, or to implement the method according to any one of claims 18 to 23.

36. A communication apparatus, wherein the communication apparatus comprises a processor and a communication interface, wherein
the communication interface is configured to communicate with a module outside the communication apparatus, and the processor is configured to run a computer program or instructions, to implement the method according to any one of claims 11 to 17, or to implement the method according to any one of claims 24 to 34.

37. A computer-readable storage medium, wherein the computer-readable storage medium comprises a computer program, and when the computer program runs on a computer, the computer is enabled to perform the method according to any one of claims 1 to 10 or claims 18 to 23, or the computer is enabled to perform the method according to any one of claims 11 to 17 or claims 24 to 34.

38. A communication system, wherein the communication system comprises the communication apparatus according to claim 35 and the communication apparatus according to claim 36.
